(19) Europäisches Patentamt
European Patent Office
Office européen des brevets

(11) **EP 2 224 784 B1**

(12) **EUROPÄISCHE PATENTSCHRIFT**

(45) Veröffentlichungstag und Bekanntmachung des Hinweises auf die Patenterteilung:
**09.05.2012 Patentblatt 2012/19**

(51) Int Cl.:
*H05B 3/14* *(2006.01)* *H05B 3/34* *(2006.01)*
*H05B 3/84* *(2006.01)* *B60R 1/06* *(2006.01)*

(21) Anmeldenummer: **10153412.1**

(22) Anmeldetag: **12.02.2010**

(54) **Beheiztes Flächenelement**

Heated area element

Elément de surface chauffé

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **26.02.2009 DE 102009010437**

(43) Veröffentlichungstag der Anmeldung:
**01.09.2010 Patentblatt 2010/35**

(73) Patentinhaber: **tesa SE**
**20253 Hamburg (DE)**

(72) Erfinder:
• **Ellringmann, Ute, Dr.**
**22523 Hamburg (DE)**

• **Dietz, Bernd**
**22949 Ammersbek (DE)**
• **Domann, Frank**
**25436 Uetersen (DE)**
• **Keite-Telgenbüscher, Klaus, Dr.**
**22529 Hamburg (DE)**
• **Dominikat, Udo**
**24999 Wees (DE)**
• **Ramm, Veronika**
**83564 Soyen (DE)**
• **Junghans, Monika**
**22457 Hamburg (DE)**

(56) Entgegenhaltungen:
EP-A1- 2 148 337    WO-A2-2006/122736
DE-A1- 10 310 722    DE-A1-102007 004 953
US-A- 6 084 217    US-B1- 6 861 138

**Beschreibung**

Die Erfindung betrifft ein selbstklebendes Flächenelement umfassend eine Heizschicht und eine Kontaktierungsschicht, wobei die Heizschicht mit einer der beiden Seitenflächen der Kontaktierungsschicht in Kontakt steht und mit dieser elektrisch leitend verbunden ist. Die Heizschicht besteht aus einer intrinsisch erwärmbaren ersten Polymermasse, die als Leiter ausgebildet ist, der sich bei Hindurchleiten eines elektrischen Stroms erwärmt. Die Erfindung betrifft ferner einen Verklebungsverbund aus einem Verklebungssubstrat und dem zuvor beschriebenen Flächenelement sowie die Verwendung eines solchen Flächenelements zum Beheizen eines Verklebungsverbunds.

In vielen Bereichen werden zum Beheizen von Gegenständen oder Räumen Elektroheizungen eingesetzt. In Elektroheizungen wird Wärme als thermische Energie durch Umwandlung von elektrischer Energie (einschließlich magnetischer Energie) gewonnen. Elektroheizungen können grundsätzlich auf unterschiedlichen technischen Prinzipien beruhen.

Neben der Wärmeerzeugung auf der Grundlage von kapazitiven oder induktiven Effekten oder von elektromagnetischer Strahlung haben sich Heizungssysteme durchgesetzt, die ein Heizwiderstandselement enthalten (so genannte Widerstandsheizungen). In derartigen Systemen wird die Wärmeenergie genutzt, die bei Hindurchleiten eines elektrischen Stroms durch das Heizwiderstandselement entsteht (Joulesche Wärme). Grundsätzlich kann dabei jeder elektrische Leiter als Heizwiderstandselement verwendet werden, der einen von null verschiedenen endlichen Widerstandswert aufweist.

Die Auswahl des Heizwiderstandselements ergibt sich aus der zu erzielenden Heizleistung; diese ist von dem Widerstandswert des Heizwiderstandselements und von dem durch das Heizwiderstandselement fließenden elektrischen Strom abhängig und nach dem Ohmschen Gesetz somit von der anliegenden Spannung. Demzufolge erfolgt die Auswahl des Heizwiderstandselements entsprechend der Beschaffenheit der darin vorhandenen Leitungswege, etwa entsprechend deren Querschnittfläche, Länge, spezifischen Widerstand und thermischer Belastbarkeit.

Insbesondere in der Automobilindustrie kommen vermehrt Widerstandsheizungen zum Einsatz, etwa zum Beheizen von Autositzen, von Fensterscheiben und von Automobilaußenspiegeln. Um bei derartigen Anwendungen die gewünschte Beheizung zu realisieren, werden im einfachsten Fall Widerstandsdrähte planar verlegt. Andere Systeme weisen als Heizwiderstandselemente schichtförmige Leiter auf, beispielsweise solche aus elektrisch leitenden Polymerschichten. So können etwa schichtförmige Heizwiderstandselemente in Form von Flächenelementen an der Rückseite des Spiegelglases eines Automobilaußenspiegels verklebt werden, die das Spiegelglas mit einer Trägerplatte im Halter des Automobilaußenspiegels verbinden und über Leiterflächen aus Aluminium großflächig kontaktiert werden. Wird nun eine Spannung an das Heizwiderstandselement angelegt, so heizt sich dieses infolge des Stromflusses auf. Die dabei erzeugte Wärme wird über ein doppelseitiges Haftklebeband auf die Glasoberfläche des Spiegels übertragen und beheizt diesen. Auf diese Weise lassen sich auf der Glasoberfläche des Spiegels Temperaturen von 45 °C bis 80 °C erzielen.

Bei modernen Automobilaußenspiegelaufbauten ergibt sich allerdings das Problem, dass zusätzlich zu dem verklebbaren Heizelement weitere Funktionalitäten im Automobilaußenspiegel realisiert werden sollen (etwa eine elektrochrome Abtönung des Spiegels), deren Umsetzung ebenfalls zur Einbautiefe oder Gesamtstärke des Bauteils beiträgt. Infolge solcher durch die jeweiligen funktionalen Strukturen immer dickeren Funktions- und Verklebungsaufbauten zwischen dem eigentlichen Spiegelglas und der Trägerplatte wird der Spielraum des Designers bei der Gestaltung des Autospiegels deutlich eingeschränkt und zudem das Gewicht des Automobilaußenspiegels insgesamt vergrößert.

Eine Verbesserung wurde dadurch erzielt, dass in einem einzigen Flächenelement zusätzlich zu dem Klebeband ebenfalls die elektrisch leitenden Strukturen des Heizelements realisiert sind. Ein derartiges haftklebriges Flächenelement, das intrinsisch erwärmbar ist und die Heizfunktion mit der Haftklebrigkeit verbindet, ist in DE 103 10 722 A1 beschrieben. Femer ist aus DE 10 2007 007 617 ein intrinsisch erwärmbares selbstklebendes Flächengebilde bekannt, bei dem die Heizschicht zugleich heißschmelzklebrig ausgebildet ist.

Ein solches kombiniertes Flächenelement aus Klebeband und Heizelement erfordert einen relativ komplizierten Aufbau, da die einzelnen Komponenten des Heizelements nicht nur mit dem Glas des Spiegels verklebt werden müssen, sondern auch mit der Trägerplatte des Spiegels, die in vielen Fällen aus dem Kunststoff Acrylnitril/Butadien/Styrol (ABS) besteht. Die Verklebung dieser unterschiedlichen Materialien stellt dabei besondere Anforderungen an das Klebeband.

Neben den Aspekten, die in den Materialien des jeweiligen Haftgrundes gegründet liegen, müssen bei einem solchen Haftklebeband, das zur Befestigung eines Heizelements an der Spiegelplatte verwendet wird und das die Wärme vom Heizelement zur Spiegeloberfläche transportiert, zusätzlich zu einer möglichst hohen thermischen Leitfähigkeit auch besondere Anpassungen im Hinblick auf die Wärmescherfestigkeit bei erhöhten Temperaturen sowie die Witterungsbeständigkeit und Haftklebrigkeit bei tiefen Temperaturen erfüllt sein. Dies gilt ebenfalls für die separate Klebeschicht, die in dem kombinierten Flächenelement zum Befestigen des Verbunds an der Trägerplatte der Spiegelhalterung vorgesehen ist.

Ein solches verklebbares Heizelement weist insgesamt jedoch eine allenfalls geringe Flexibilität auf und ist relativ starr. Das Heizelement kann somit auf einem gekrümmten Haftgrund nur schlecht verklebt werden, da die Festigkeit des Heizelements einer Verformung einen hohen mechanischen Widerstand entgegenbringt. Hierdurch kann es zu einem lokalen oder vollflächigen Ablösen des Heizelements vom Verklebungssubstrat (dem Haftgrund) kommen, was die Übertragung der elektrisch erzeugten Wärmeenergie auf das Verklebungssubstrat vermindert oder sogar verhindert.

Zudem kann es passieren, dass ein auf einem Verklebungssubstrat mit gekrümmter Oberfläche verklebtes Heizelement sich von dem Substrat bei Erwärmung des Substrats wieder ablöst, da zusammen mit dem Substrat auch die Klebemasse des Heizelements erwärmt wird und somit erweicht. Infolge der hohen Eigensteifigkeit konventioneller verklebbarer Heizelemente kann dies ein Aufspalten der erweichten Klebemasse zur Folge haben, so dass sich diese vom Verklebungssubstrat ablöst. Darüber hinaus beeinträchtigt die Starrheit des Aufbaus herkömmlicher verklebbarer Heizelemente die mechanische Kälteschlagfestigkeit einer Verklebung unterschiedlicher Verklebungssubstrate, etwa eines Spiegels mit einem Spiegelhalter.

Insbesondere bei großen und gewölbten Substratflächen ergibt sich das Problem, dass durch Fertigungstoleranzen (etwa von Spiegelglas und Trägerplatte) über die Fläche differierende Spaltmaße auftreten, die oft eine vollflächige Klebeverbindung verhindern. In diese Bereiche können zudem flüssige oder gasförmige Medien (Fluide) eindringen, beispielsweise Regenwasser oder Kondenswasser, und die Festigkeit der Klebeverbindung weiter herabsetzen.

Die Verklebbarkeit auf gekrümmten Substraten wird zum einen durch die Trägerfolie limitiert. Derartige Trägerfolien weisen üblicherweise Stärken von 75 µm bis 250 µm auf und dienen dazu, die mechanische Stabilität der Flächenelemente zu verbessern (um etwa als Splitterschutz bei einem eventuellen Bruch des Spiegels ein Freisetzen von Splittern wirksam zu verhindern). Durch eine solche Trägerfolie wird allerdings die Flexibilität des Flächenelements insgesamt stark herabgesetzt, insbesondere die Flexibilität in zwei Dimensionen.

Zusätzlich zu der Trägerfolie erschweren auch die Leiterflächen selbst eine Verklebung auf einem gekrümmten Substrat, da diese üblicherweise aus vergleichsweise starren Metallschichten oder aus elektrisch leitenden Tinten, Lacken oder Druckfarben bestehen, die bei starkem Biegen oder Dehnen brechen können, so dass der elektrische Kontakt in diesen Systemen nicht zuverlässig gewährleistet ist.

Die Starrheit eines solchen Aufbaus herkömmlicher verklebbarer Flächenelemente verringert schließlich auch die mechanische Kälteschlagfestigkeit der damit erreichbaren Verklebungen von Verklebungssubstraten aus unterschiedlichen Materialien miteinander, etwa der Glasoberfläche eines Spiegels mit einem Spiegelhalter aus einem Kunststoff.

Es wurde daher vorgeschlagen, ein Flächenelement mit einer Kontaktierungsschicht aus einem zumindest im Wesentlichen flächenförmig ausgebreiteten durchbrochenen Kontaktierungselement zu verwenden. Infolge der flächig-durchbrochenen Ausbildung des Kontaktierungselements erhält dieses eine flexible Beschaffenheit und somit eine erhöhte Bruchfestigkeit. Dabei gewinnt das Kontaktierungselement senkrecht zu der Hauptausdehnung (Flächenausdehnung, Hauptausdehnungsebene) des Flächenelements an Flexibilität, so dass das Kontaktierungselement bei einer quer zur Hauptausdehnung einwirkenden Kraft (Biegebeanspruchung) beweglich-flexibel ist, ohne unter der so entstehenden mechanischen Spannung zu brechen. Gleichzeitig ist durch die zumindest im wesentlichen flächenförmige Ausdehnung des Kontaktierungselements sichergestellt, dass die Kontaktfläche zwischen dem den elektrischen Strom leitenden Kontaktierungselement und der Heizschicht hinreichend groß ist, um ein großflächiges Erwärmen sicherzustellen und so die Hauptfunktionalität zu gewährleistet. Infolge dieser besonderen Ausbildung erfordert ein solches Flächenelement keine stabilisierende Trägerfolie, die dessen Flexibilität herabsetzt. Mit einem derartigen Flächenelement ist es daher möglich, die erwünschte Flexibilität bei einer eindimensionalen Krümmung der Oberfläche des Verklebungssubstrats zu erzielen.

Selbst bei Verwendung eines derartigen hochflexiblen Flächenelements kann jedoch eine vollflächige Verklebung auf einer Oberfläche nicht erzielt werden, die in mehr als einer Raumrichtung gekrümmt ist, da hierfür eine mehrdimensionale Verformbarkeit des Flächenelements erforderlich ist. Eine mehrdimensionale Verformung lässt sich aber selbst mit einem hochflexiblen Flächenelement nicht ohne Faltenwurf erreichen, so dass dieses nicht zum Beheizen von Oberflächen mit dreidimensionaler Kontur geeignet ist.

Gerade auch bei Oberflächen, die in mehr als einer Richtung gekrümmt sind, stellt sich die schlechte Verklebbarkeit als besonders problematisch heraus. Dies betrifft etwa Autorückspiegel, die einen einteiligen Spiegel mit einem erweiterten Sichtbereich aufweisen, in denen der Spiegel eine in zwei Raumrichtungen gekrümmte Oberfläche aufweist, zum Beispiel bei Weitwinkelspiegeln oder Nahbereichsspiegeln. Derartige Spiegel sind in Anbetracht der gestiegenen gesetzlichen Anforderungen an die Größe des Blickfelds eines Autorückspiegels sinnvoll, da es durch Verwendung eines in zwei Richtungen gekrümmten Spiegels möglich ist, eine andernfalls erforderliche Vergrößerung der Spiegelfläche zu vermeiden und die damit verbundenen aerodynamischen Nachteile und Designeinschränkungen zu umgehen. Selbst bei Einsatz eines hochflexiblen Flächenelements kann ein solcher Spiegel mit einer Krümmung in zwei Dimensionen nicht hinreichend stabil verklebt werden, da es auch hier zu einem lokalen oder vollständigen Ablösen sowie zu einer Faltenbildung kommt.

Eine Aufgabe der vorliegenden Erfindung ist es daher, ein Flächenelement zur Verfügung zu stellen, das diese Nachteile beseitigt und das derart ausgebildet ist, dass es einen guten thermischen Kontakt auch an einem Haftgrund mit zwei- oder dreidimensional gekrümmter Oberfläche ermöglicht, gleichzeitig an diesem eine hohe Verklebungsfestigkeit zeigt und zudem einen einfachen Aufbau aufweist, so dass das Flächenelement unter ökonomischen und ökologischen Gesichtspunkten günstig hergestellt werden kann.

Diese Aufgabe wird überraschend und für den Fachmann in nicht vorhersehbarer Weise durch ein Flächenelement der eingangs genannten Art gelöst, bei dem die Kontaktierungsschicht aus einer elektrisch leitenden zweiten Polymermasse besteht, wobei die erste Polymermasse und die zweite Polymermasse jeweils eine Polymermasse auf der Basis von Elastomeren und/oder von plastischen Polymeren ist, und jeweils bei einer Dehngeschwindigkeit von 300 mm/min eine Reißdehnung von mehr als 20 % aufweist, insbesondere von mehr als 50 % oder sogar von mehr als 100 %, und außerdem einen Zug-Elastizitätsmodul von weniger als 1.000 MPa oder sogar von höchstens 100 MPa besitzt.

Ein derart aufgebautes Flächenelement ist hochverformbar und kann somit auch auf unregelmäßigen Oberflächen verklebt werden. Dies beruht in erster Linie auf der besonderen Ausbildung der Heizschicht und der Kontaktierungsschicht, die erfindungsgemäß beide aus Polymermassen bestehen, die auf der Basis von Elastomeren und/oder von plastischen Polymeren hergestellt wurden.

Zudem müssen die beiden Polymermassen eine besonders hohe Reißdehnung und gleichzeitig einen besonders niedrigen Zug-Elastizitätsmodul aufweisen. Infolge des niedrigen Zug-Elastizitätsmoduls sind die Polymermassen hinreichend nachgiebig. Gleichzeitig müssen sie aber auch eine hohe Reißdehnung aufweisen, um insgesamt zerstörungsfrei verformbar zu sein. Nur Polymermassen, in denen die beiden erfindungsgemäßen Merkmale zugleich realisiert sind, sind in ausreichendem Maß verformbar, um sich ohne Einschränkung der Funktionalität den Konturen des Verklebungssubstrats anpassen zu können und so auch eine Verklebung auf Substraten zu ermöglichen, deren Oberfläche nicht plan ausgebildet ist. Dies hat überdies zur Folge, dass das Flächenelement dazu in der Lage ist, geringfügige Unebenheiten in der Oberfläche des Haftgrundes auszugleichen.

Infolge dieser Ausbildung gewinnt das Flächenelement parallel zu seiner Hauptausdehnung (Hauptausdehnungsebene) an Elastizität, so dass es bei einer parallel zur Hauptausdehnung einwirkenden Kraft beweglich-elastisch ist, ohne dabei unter der so entstehenden mechanischen Spannung zu reißen. Ist der niedrige Zug-Elastizitätsmodul höher, so würde das Flächenelement hingegen zu steif, wohingegen eine niedrigere Reißdehnung eine zu geringe Verformbarkeit insgesamt zur Folge hätte.

Von Vorteil ist es, wenn zusätzlich zu den Merkmalen einer oder mehrerer der vorgenannten Ausbildungen die erste Polymermasse und/oder die zweite Polymermasse eine Selbstklebemasse ist. Auf diese Weise kann beim Flächenelement auf zusätzliche Selbstklebemasseschichten verzichtet werden, so dass sich Flächenelemente mit einem besonders einfachen Aufbau herstellen lassen, die eine geringe Einbauhöhe haben und gleichzeitig einen besonders guten Wärmetransport ermöglichen.

Dabei hat es sich ferner als günstig herausgestellt, wenn die erste Polymermasse und/oder die zweite Polymermasse eine Haftklebemasse ist bzw. sind. Derartige Systeme ermöglichen ein besonders einfaches Verkleben, ohne dass dafür weitere Prozessschritte wie etwa ein Erhitzen der Flächenelemente erforderlich ist, so dass derartige Selbstklebemassen auch bei einem Haftgrund eingesetzt werden können, der eine stark unregelmäßige Geometrie aufweist oder wärmeempfindlich ist.

Als Haftklebemassen haben sich insbesondere solche auf der Basis von Acrylaten und/oder Methacrylaten, Polyurethanen, Naturkautschuken, Synthesekautschuken und/oder Silikonen als vorteilhaft herausgestellt. Derartige Haftklebemassen bieten den Vorzug, dass sich die klebtechnischen Eigenschaften des Flächenelements im breiten Umfang steuern lassen und somit gezielt auf die konkreten Verhältnisse der zu erzielenden Verklebung einstellen lassen, etwa im Hinblick auf den jeweiligen Haftgrund oder die Umgebungsbedingungen.

Stattdessen kann die erste Polymermasse und/oder die zweite Polymermasse günstigerweise auch eine Heißschmelzklebemasse sein. Mit Hilfe einer derartigen Heißschmelzklebemasse lässt sich eine besonders hohe Verklebungsfestigkeit erzielen, weshalb solche Systeme insbesondere dort Anwendung finden, wo die Verklebung starken mechanischen Belastungen ausgesetzt ist. Dies schließt natürlich nicht aus, dass es sich bei einer der beiden Polymermassen (erste Polymermasse und zweite Polymermasse) um eine Haftklebemasse und bei der anderen der beiden Polymermassen um eine Heißschmelzklebemasse handelt.

Als Heißschmelzklebemassen haben sich insbesondere solche auf der Basis von Polyolefinen und Copolymeren von Polyolefinen sowie von deren säuremodifizierten Derivaten, von Ionomeren, von thermoplastischen Polyurethanen, von Polyamiden und deren Copolymeren sowie von Blockcopolymeren wie Styrol-Blockcopolymeren als vorteilhaft herausgestellt. Mit Hilfe dieser Klebemassesysteme lassen sich die klebtechnischen Eigenschaften des Flächenelements in besonders breitem Umfang bei gleichzeitig hoher Klebkraft steuern und somit gezielt auf die konkreten Verhältnisse der zu erzielenden Verklebung einstellen. Auf diese Weise wird ein Flächenelement mit einer besonders hohen Klebkraft erhalten, das auch zum Verkleben schwerer oder mechanisch stark belasteter Elemente geeignet ist und dessen klebtechnische Eigenschaften sich ebenfalls über einen großen Bereich ändern lassen.

Das Flächenelement kann zusätzlich zu den Merkmalen einer oder mehrerer der vorgenannten Ausbildungen ferner eine Klebemasseschicht aus einer Selbstklebemasse umfassen, die mit der anderen der beiden Seitenflächen der Kontaktierungsschicht in Kontakt steht. Auf diese Weise können die klebtechnischen Eigenschaften des Flächenelements insgesamt von den Eigenschaften der Polymermasse der Kontaktierungsschicht entkoppelt werden. Somit ist es möglich, eine besonders hohe Verklebungsstabilität insgesamt zu erreichen, da die Klebemassen an den selbstklebenden Seitenflächen des Flächenelements individuell auf den jeweiligen Klebegrund eingestellt sein können und gleichzeitig die Kontaktierungsschicht für eine besonders gute Verankerung an der Heizschicht angepasst werden kann, was insbesondere dann von Bedeutung ist, wenn das Material der Oberfläche der Kontaktierungsschicht stark von dem Material der Oberfläche des Klebegrunds abweicht.

Besonders günstig ist es zur Verwirklichung der Erfindung, wenn zusätzlich zu den Merkmalen einer oder mehrerer der vorgenannten Ausbildungen die erste Polymermasse ein Kaltleiter ist. Ein Kaltleiter (PTC-Element) ist ein Heizwiderstandselement, dessen den Strom leitende Bereiche aus einem Material bestehen, das bezüglich seines elektrischen Widerstands einen positiven Temperaturkoeffizienten (englisch: positive temperature coefficient, PTC) aufweist. Somit handelt es sich bei Kaltleitern um den elektrischen Strom leitende Materialien, deren Widerstand mit der Temperatur ansteigt und die somit bei tiefen Temperaturen den Strom besser leiten als bei hohen Temperaturen. Die Verwendung derartiger sich kaltleitend verhaltender Materialien als Heizwiderstandselemente (PTC-Elemente) bietet den praktischen Vorteil, dass bei Anlegen einer konstanten Spannung an ein solches Heizelement das Überhitzen des Heizelements vermieden wird, da bei einem Anstieg der Betriebstemperatur der Widerstand des Heizelements zunimmt, wodurch sich gemäß dem Ohmschen Gesetz der Strom proportional zu der Widerstandszunahme verringert, die insgesamt erreichte Heizleistung abnimmt und das Heizelement sich wieder abkühlt. Je nach dem konkreten Anwendungszweck kann eine derartige intrinsische Temperaturbegrenzung anstelle von oder zusätzlich zu einer externen Regelung eingesetzt werden.

Es hat sich ferner als günstig herausgestellt, wenn zusätzlich zu den Merkmalen einer oder mehrerer der vorgenannten Ausbildungen die zweite Polymermasse kein Kaltleiter ist. Hierdurch lässt sich eine gleichmäßige Spannungsverteilung über die Fläche der Kontaktierungsschicht erreichen, was eine homogene Temperaturverteilung im Flächenelement zur Folge hat.

Vorteilhaft ist es des Weiteren, wenn zusätzlich zu den Merkmalen einer oder mehrerer der vorgenannten Ausbildungen der elektrische Widerstand der Kontaktierungsschicht weniger als ein Zehntel des elektrischen Widerstands der Heizschicht beträgt, bevorzugt auch weniger als ein Hundertstel oder sogar noch weniger. Infolge dieser Ausbildung fällt die an dem Heizelement insgesamt anliegende Spannung zum überwiegenden Teil an der Heizschicht und nicht an der Kontaktierungsschicht ab, so dass die Wärmeentwicklung zumindest im wesentlichen im Bereich des Heizelements erfolgt. Hierdurch wird eine über die gesamte Flächenausdehnung des Flächenelements gleichmäßig Wärmeentwicklung erreicht, bei der die in der Kontaktierungsschicht selbst erzeugte Wärmemenge gering gehalten wird.

Darüber hinaus kann das Flächenelement derart ausgebildet sein, dass sich der elektrische Widerstand der Kontaktierungsschicht zusätzlich zu den Merkmalen einer oder mehrerer der vorgenannten Ausbildungen bei einer Dehnung der Kontaktierungsschicht um mehr als 20 %, insbesondere um mehr als 50 % oder sogar um mehr als 100 %, höchstens verdreifacht, insbesondere sich nicht vergrößert. Enthält die Kontaktierungsschicht einen elektrisch leitenden Füllstoff zu einem hohen Masseanteil (also bei einer hochgefüllten zweiten Polymermasse), so kann bei geeigneter Materialwahl die Leitfähigkeit der Kontaktierungsschicht bei einer Dehnung zunehmen, so dass der Widerstand insgesamt abnimmt; entsprechende Materialien und Materialkombinationen sind dem Fachmann bekannt. Infolge dieser Ausgestaltung ist sichergestellt, dass auch bei einer lokalen Dehnung des Flächenelements keine erhebliche lokale Erhöhung des Widerstands eintritt. Auf diese Weise wird vermieden, dass in dem gedehnten Bereich aufgrund eines lokal höheren Spannungsabfalls ein nur geringer Strom fließt, was zur Folge hätte, dass auch der Anteil der gedehnten Bereiche an der Wärmeentwicklung gering wäre. Demzufolge ist durch diese Ausgestaltung gewährleistet, dass die Wärmeentwicklung im Flächenelement tatsächlich großflächig erfolgt, im Idealfall sogar vollflächig.

Weiterhin kann es von Vorteil sein, wenn zusätzlich zu den Merkmalen einer oder mehrerer der vorgenannten Ausbildungen die Kontaktierungsschicht eine verzweigte Kammstruktur oder Fingerstruktur aufweist. Eine derartige Form ermöglicht eine optimale Nutzung nahezu der gesamten Fläche des Flächenelements zur Wärmeerzeugung bei nur kleinen Aussparungen, ohne dass hierdurch die mechanischen Eigenschaften in nennenswerter Weise beeinträchtigt werden oder ein starker Spannungsabfall über die Schicht zu erwarten ist. Bei einer Kammstruktur wie auch bei einer Fingerstruktur (Interdigitalstruktur) zweigen einzelne Zinken bzw. Finger von einem Hauptstrang ab. Der Hauptstrang kann hierbei einen größeren Querschnitt aufweisen als die Zinken bzw. Finger oder aber denselben Querschnitt. Der Unterschied zwischen einer Kammstruktur und einer Fingerstruktur besteht darin, dass die abzweigenden Elemente bei einer Kammstruktur auf derselben Seite vom Hauptstrang angeordnet sind, während bei einer Fingerstruktur diese auf unterschiedlichen Seiten abzweigen. Beide Strukturen können sowohl einfache als auch mehrfache Verzweigungen und dabei sowohl regelmäßige als auch unregelmäßig Anordnungen aufweisen und lassen sich sowohl bei einer Ausbildung der Kontaktierungsschicht als eine einzige Elektrode als auch bei einer Ausbildung der Kontaktierungsschicht als mehrere Elektroden einsetzen.

Darüber hinaus ist es dienlich, wenn die erste Polymermasse und/oder die zweite Polymermasse zusätzlich zu den Merkmalen einer oder mehrerer der vorgenannten Ausbildungen mindestens einen elektrisch leitenden Füllstoff umfasst. Auf diese Weise lässt sich besonders einfach und kostengünstig eine elektrisch leitende Polymermasse erhalten, die eine für viele Anwendungen hinreichende hohe Heizleistung bietet. Besonders vorteilhaft ist es dabei, wenn der elektrisch leitende Füllstoff ausgewählt ist aus der Gruppe umfassend Graphit, Kohlenstoff-Nanoteilchen und Ruß, insbesondere Leitruß. Der Vorteil einer solchen Zusammensetzung besteht darin, dass diese Füllstoffe eine besonders gute Verbindung mit der Polymermatrix aufweisen, so dass eine derartige Polymermasse insgesamt über eine hohe Kohäsion verfügt und daher stark mechanisch belastbar wird. Bevorzugt kommen hierbei Teilchen zum Einsatz, die eine Neigung zur selbsttätigen Netzwerkbildung (Aggregatbildung) aufweisen, zum Beispiel Ruße, Kohlenstoff-Nanoröhren oder andere nanopartikuläre Systeme. Ein derartiges sich ausbildendes Netzwerk wird bei Dehnung weniger stark in seiner Leitfähigkeit beeinträchtigt als dies bei elektrisch leitenden Füllstoffen der Fall ist, die in der Polymermasse in isolierter Form vorliegen.

Ferner ist es von Vorteil, wenn das Flächenelement zusätzlich zu den vorgenannten Merkmalen trägerfrei ausgebildet ist, das heißt also keinen permanenten Träger aufweist. Hierdurch wird ein Flächenelement mit einer besonders hohen Flexibilität und Elastizität erhalten, mit dem sich äußerst geringe Einbautiefen des Flächenelements realisieren lassen. Stattdessen kann das Flächenelement auch einen permanenten Träger umfassen, der bei einer Dehngeschwindigkeit von 300 mm/min eine Reißdehnung von mehr als 20 %, insbesondere von mehr als 50 % oder sogar von mehr als 100 %, und außerdem einen Zug-Elastizitätsmodul von weniger als 1.000 MPa oder sogar von höchstens 100 MPa aufweist. Infolge der Verwendung eines derartigen permanenten Trägers mit hoher Elastizität wird ein hochstabiles Flächenelement erhalten, das hervorragend geeignet ist, auf unebenen Oberflächen sowie auf Oberflächen, die in mehr als einer Raumrichtung gebogen (mehrdimensional gekrümmt) sind, verklebt zu werden.

Gemäß einem weiteren Aspekt der vorliegenden Erfindung wird ein Verklebungsverbund aus einem Verklebungssubstrat und einem der vorgenannten Flächenelemente vorgeschlagen. Die bisher bekannten Verklebungsverbunde haben den Nachteil, dass diese auf mehrdimensional gekrümmten Oberflächen nicht zuverlässig dauerhaft verklebt werden können, da es infolge der Eigensteifigkeit der einseitig damit verklebten selbstklebenden Flächenelemente zu einem Ablösen von der gekrümmten Oberfläche kommen kann. Dieser Nachteil wird durch Verwendung des erfindungsgemäßen Flächenelements vermieden. Insbesondere ist dies günstig, wenn es sich bei dem Verklebungsverbund um einen Verbund aus zumindest einem doppelseitig selbstklebenden Flächenelement und einer Sichtscheibe oder Spiegelscheibe als Verklebungssubstrat handelt, da bei derartigen Systemen infolge des hohen Eigengewichts des Verklebungssubstrats ein Ablösen des Verklebungssubstrats aus der Halterung und die daraus potentiell resultierende Zerstörung des Verklebungssubstrats besonders problematisch wäre.

Ferner schlägt die vorliegende Erfindung die Verwendung des zuvor beschriebenen Flächenelements zur Verklebung von Verklebungssubstraten in der Automobilindustrie vor, insbesondere zum Beheizen des vorgenannten Verklebungsverbunds. Wird ein Verklebungsverbund der bisher bekannten Art auf einem Verklebungssubstrat mit unregelmäßig geformter oder mehrdimensional gekrümmter Oberfläche verklebt und danach bestimmungsgemäß intrinsisch erwärmt, so geht mit der Erwärmung der Polymermasse eine Erweichung der Polymermasse und damit auch eine Abnahme der Kohäsion der Polymermasse einher, was zum Aufspalten der erweichten Polymermasse führen kann, so dass sich der Verklebungsverbund zumindest teilweise vom Verklebungssubstrat ablöst. Dieser Nachteil wird durch Verwenden des erfindungsgemäßen Flächenelements zum Beheizen des Verklebungsverbunds vermieden.

Die einzelnen vorteilhaften Ausgestaltungen lassen sich, soweit nicht anders angegeben, beliebig untereinander kombinieren und damit die zuvor beschriebenen sowie weitere vorteilhafte Wirkungen erzielen; diese Merkmale werden daher in Kombination mit den Merkmalen der unabhängigen Ansprüche auch für sich genommen als schutzfähig erachtet.

Zur Verdeutlichung der Erfindung ist diese im Folgenden allgemein beschrieben, wozu einige repräsentative Beispiele einzelner Bestandteile von Teilaspekten der Erfindung erläutert werden, die in Abhängigkeit von den jeweils gewünschten Eigenschaften nahezu beliebig miteinander verknüpft werden können.

Grundsätzlich betrifft die Erfindung ein selbstklebendes Flächenelement. Als Flächenelement im Sinne dieser Anmeldung gelten insbesondere alle üblichen und geeigneten Gebilde mit zumindest im wesentlichen flächenförmiger Ausdehnung. Diese ermöglichen eine flächige Verklebung und können verschieden ausgestaltet sein, insbesondere flexibel, als Klebefolie, Klebeband, Klebeetikett oder als Formstanzling. "Zumindest im wesentlichen flächenförmige Ausdehnung" bedeutet, dass die Teilbereiche, aus denen sich das Flächenelement zusammensetzt, in einer flächigen Anordnung vorliegen, wobei einzelne Teilbereiche auch aus dieser flächigen Anordnung herausragen können.

Bei diesem Flächenelement handelt es sich ferner um ein selbstklebendes Flächenelement. Dies bedeutet, dass zumindest eine der parallel zu seiner Hauptausdehnung angeordneten Seitenflächen des Flächenelements oder sogar beide Seitenflächen selbstklebend ausgerüstet ist bzw. sind und somit zumindest partiell eine Selbstklebemasse aufweist bzw. aufweisen.

Als Selbstklebemassen werden vorliegend ausnahmslos alle Klebemassen auf der Basis von Haftklebemassen und/oder Heißschmelzklebemassen verstanden, also Klebemassen, die von sich aus eine dauerhafte Verklebung mit dem Substrat (dem Untergrund, Haftgrund oder Klebegrund) erlauben. "Auf der Basis von" oder "auf der Grundlage von" bedeutet vorliegend, dass die klebtechnischen Eigenschaften dieses Klebemassesystems zumindest stark von den grundlegenden Eigenschaften dieser Klebemasse oder dieser Klebemassenbestandteile (dem so genannten Basispolymer) bestimmt werden, und beschreibt insbesondere Klebemassesysteme, deren polymere Phase diese Klebemasse oder diese Klebemassenbestandteile zu einem Gehalt von mindestens 40 Gew.-% aufweist. Dies schließt selbstverständlich nicht aus, dass die grundlegenden Eigenschaften der Klebemasse oder Klebemassenbestandteile durch Verwendung von modifizierenden Hilfs- oder Zusatzstoffen oder von weiteren polymeren Klebemassen in dem Klebesystem zusätzlich beeinflusst werden.

Erfindungsgemäß enthält das Flächenelement mindestens zwei unterschiedliche Schichten, eine Heizschicht und eine Kontaktierungsschicht. Als Schicht wird insbesondere eine flächenförmige Anordnung eines Systems einheitlicher Funktionalität bezeichnet, deren Abmessungen in einer Raumrichtung signifikant kleiner ist als in den beiden anderen Raumrichtungen, die die Hauptausdehnung definieren. Eine derartige Schicht kann kompakt oder auch durchbrochen ausgebildet sein und aus einem einzigen Material oder aus unterschiedlichen Materialien bestehen, wobei letzteres insbesondere dann der Fall sein kann, wenn diese zur einheitlichen Funktionalität dieser Schicht beitragen. Eine Schicht kann eine über ihre gesamte Flächenausdehnung konstante Dicke aufweisen oder aber unterschiedliche Dicken. Darüber hinaus kann eine Schicht natürlich auch mehr als eine einzige Funktionalität aufweisen.

In dem erfindungsgemäßen Flächenelement ist eine bestimmte Schichtabfolge vorgesehen. Als Schichtabfolge wird insbesondere eine räumliche Anordnung von einzelnen Schichten bezeichnet, die senkrecht zu ihrer Hauptausdehnung übereinander

(stapelförmig) angeordnet sind und jeweils direkt miteinander in Kontakt stehen, ohne dass dazwischen weitere Schichten vorhanden sind. Innerhalb der erfindungsgemäßen Schichtabfolge ist eine Kontaktierungsschicht direkt an einer Heizschicht angeordnet.

Als Heizschicht wird jede Schicht bezeichnet, die zur Erwärmung des Flächenelements eingerichtet ist. Als Kontaktierungsschicht wird jede den elektrischen Strom gut leitende Schicht bezeichnet, mit deren Hilfe eine Spannung an die Heizschicht angelegt und/oder ein Strom durch zumindest durch einen Teilbereich der Heizschicht hindurch geleitet werden kann; die Kontaktierungsschicht dient somit zum Anschluss externer elektrischer Versorgungsleitungen an das Flächenelement (Kontaktierungselektrodenfunktion).

Demzufolge steht die Heizschicht mit einer der beiden Seitenflächen der Kontaktierungsschicht (also der Oberseite oder der Unterseite der Kontaktierungsschicht) in Kontakt, so dass sich diese beiden Schichten direkt, das heißt unmittelbar, berühren. Zudem ist die Heizschicht mit dieser einen Seitenfläche der Kontaktierungsschicht elektrisch leitend verbunden. Eine Verbindung wird insbesondere dann als elektrisch leitend bezeichnet, wenn der elektrische Gesamtwiderstand der Verbindung, der sich aus den Widerständen der zu verbindenden Teilabschnitte und dem Kontaktwiderstand der Verbindung zusammensetzt, höchstens drei Größenordnungen größer als die Gesamtwiderstände der restlichen leitenden Bereiche und Kontakte ist.

Die Kontaktierungsschicht ist eine elektrisch leitende Verbindung zwischen der Heizschicht und der Stromquelle bzw. Spannungsquelle (die üblicherweise eine Spannung bis 50 V bereitstellt, wobei die Betriebsspannung in Spezialanwendungen auch höher gewählt werden kann). Hierbei kann die Kontaktierungsschicht entweder als einer der beiden Elektrodenanschlüsse (Pole) der Heizschicht ausgebildet sein oder aber beide Elektrodenanschlüsse bilden. Stellt die Kontaktierungsschicht lediglich einen der beiden Elektrodenanschlüsse der Heizschicht dar, so ist ein zweiter Elektrodenanschluss erforderlich, damit durch die Heizschicht ein Strom fließen kann und die Heizschicht sich erwärmt. Dieser zweite Elektrodenanschluss kann dabei innerhalb des erfindungsgemäßen Flächenelements ausgebildet sein - etwa in Form einer zusätzlichen zweiten flexiblen Kontaktierungsschicht - oder aber an einem der beiden Verklebungssubstrate vorgesehen sein, beispielsweise als metallische Schicht an der Oberfläche eines Glases (etwa als Silberschicht eines Spiegels). In diesem Fall wird ein Stromfluss durch die Heizschicht dann hauptsächlich in einer Richtung senkrecht zur Hauptausdehnung auftreten.

Stellt die Kontaktierungsschicht hingegen beide Elektrodenanschlüsse der Heizschicht dar, so enthält die Kontaktierungsschicht also mindestens zwei nicht miteinander leitend verbundene Bereiche, die als die zwei Elektrodenzuleitungen (Pole) der Heizschicht ausgebildet sind. In dieser Anordnung kann zusätzlich zu dem senkrechten Stromfluss oder anstelle dessen ein lateraler Stromfluss innerhalb der Hauptausdehnung auftreten. Die Kontaktierungsschicht kann typischerweise eine Dicke von weniger als 100 $\mu$m, aufweisen, bevorzugt von weniger als 20 $\mu$m und besonders bevorzugt von weniger als 10 $\mu$m.

Erfindungsgemäß besteht die Heizschicht aus einer intrinsisch erwärmbaren ersten Polymermasse und die Kontaktierungsschicht aus einer elektrisch leitenden zweiten Polymermasse. Unter einer Polymermasse wird jede Zusammensetzung verstanden, die zumindest ein Basispolymer enthält. Zusätzlich zu diesem Basispolymer kann eine Polymermasse optional auch weitere Bestandteile enthalten, etwa weitere Polymere oder Zusatzstoffe. Die Heizschicht wie auch die Kontaktierungsschicht können dabei jeweils in beliebigen geeigneten Anordnungen vorliegen, beispielsweise als vollflächige durchgängige Schicht oder als besonders geformte Struktur, etwa als Kamm- oder Fingerstruktur.

Als Basispolymer einer Polymermasse wird ein Polymer bezeichnet, dessen Eigenschaften einzelne oder sogar alle Eigenschaften der gesamten Polymerzusammensetzung dominieren, wobei selbstverständlich nicht ausgeschlossen ist, dass die Eigenschaften der Polymermasse durch Verwendung von modifizierenden Hilfs- oder Zusatzstoffen oder von weiteren Polymeren in der Zusammensetzung zusätzlich mit beeinflusst werden. Insbesondere kann dies bedeuten, dass der Anteil des Basispolymers an der Gesamtmasse der polymeren Phase der Polymermasse (und damit gegebenenfalls auch der polymeren Phase der Klebemasse) mehr als 50 Gew.-% und/oder dass der Anteil des Basispolymers an der Gesamtmasse der Polymermasse mehr als 20 Gew.-% beträgt. Enthält die Polymermasse nur ein einziges Polymer, so ist dieses Polymer natürlich das Basispolymer.

Als intrinsisch erwärmbare Polymermasse gilt jede Polymermasse, die von sich aus erwärmbar ist, das heißt, dass diese. Polymermasse ohne weitere Bauteile oder Komponenten in der Lage ist, bei Hindurchleiten eines elektrischen Stroms durch die Polymermasse oder bei Anlegen einer elektrischen Spannung an die Polymermasse selber Wärme zu produzieren, wobei es unerheblich ist, ob der Strom bzw. die Spannung ein Wechselstrom bzw. eine Wechselspannung ist oder aber ein Gleichstrom bzw. eine Gleichspannung. Der für die Wärmeerzeugung ablaufende Prozess ist üblicherweise ein wiederholbarer Prozess, beispielsweise eine Erwärmung infolge elektrischen Widerstands der Polymermasse. Eine Wärmeerzeugung lässt sich erfindungsgemäß jedoch auch anders verwirklichen, etwa als einmalig ablaufender Prozess, beispielsweise eine exotherme irreversible chemische Reaktion, die elektrisch initiierbar ist.

Zur Realisierung der vorliegenden Erfindung ist es jedoch zwingend erforderlich, dass das Flächenelement insgesamt verformbar ist. Dies wird dadurch erreicht, dass das Flächenelement besondere verformbare Schichten aufweist. Die Verformbarkeit der Heizschicht und der Kontaktierungsschicht ergibt sich aus der Verwendung von bestimmten Polymermassen, die die Heizschicht beziehungsweise die Kontaktierungsschicht bilden. So ist es zum einen erforderlich, dass beide Polymermassen, die erste Polymermasse und die zweite Polymermasse, Polymermassen auf der Basis von Elastomeren und/oder von plastischen Polymeren sind.

Als Elastomere bezeichnet man elastisch verformbare und dabei formfeste Polymere mit einer Glasübergangstemperatur unterhalb der Raumtemperatur. Ein Körper aus einem Elastomer verformt sich unter einer einwirkenden Deformationskraft elastisch, kehrt aber wieder in seine ursprüngliche unverformte Gestalt zurück, wenn die Deformationskraft fortfällt. Dies beinhaltet im Sinne der Anmeldung ebenfalls viskoelastische Polymere, die ein Verhalten besitzen, das zum Teil elastisch und zum Teil viskos ist, so dass der Körper nach Wegfall der Deformationskraft nur teilweise (unvollständig) wieder seine ursprüngliche Gestalt annimmt und die verbliebene Deformationsenergie dann innerhalb eines viskosen Fließvorgangs abgebaut wird.

Als plastisches Polymer bezeichnet man Polymere, die sich unter einer einwirkenden Deformationskraft plastisch verformen, wobei die Verformung auch nach Fortfall der Deformationskraft vollständig oder zumindest teilweise bestehen bleibt.

Ferner müssen die Polymermassen jeweils bei einer Dehngeschwindigkeit von 300 mm/min eine Reißdehnung von mehr als 20 % aufweisen, insbesondere von mehr als 50 % oder sogar von mehr als 100 %, und außerdem einen Zug-Elastizitätsmodul von weniger als 1.000 MPa oder sogar von höchstens 100 MPa besitzen.

Die Reißdehnung (Bruchdehnung) ist eine Kennzahl für die mechanische Belastbarkeit und Verformungsfähigkeit von Werkstoffen. Dieser Materialkennwert gibt die bleibende prozentuale Längenänderung eines Probenkörpers an (bezogen auf dessen anfängliche Länge), die dieser bei einem Bruch infolge mechanischer Überbelastung aufweist.

Der Zug-Elastizitätsmodul (Elastizitätsmodul, Zugmodul, Elastizitätskoeffizient, Youngscher Modul) ist ein Materialkennwert, mittels dessen bei der Verformung eines Werkstoffs mit linear elastischem Verhalten der Zusammenhang zwischen Spannung und Dehnung beschrieben wird. Bei Werkstoffen mit nichtlinear-elastischem Verhalten wird vorliegend als Zug-Elastizitätsmodul das anfängliche Zug-Elastizitätsmodul bei Einsetzen der Zugbelastung verstanden. Der Betrag des Elastizitätsmoduls ist umso größer, je mehr Widerstand ein Material seiner Verformung entgegensetzt. Die Steifigkeit eines konkreten Körpers aus diesem Werkstoff hängt zusätzlich von der Verarbeitung und von der Geometrie des Körpers ab.

Reißdehnung und Zug-Elastizitätsmodul werden nach DIN EN ISO 527-3 bei Raumtemperatur mit einem definierten Probekörper (Typ 5) für eine Dehngeschwindigkeit von 300 mm/min bestimmt.

Aus diesen zur Verwirklichung der vorliegenden Erfindung zwingend erforderlichen Eigenschaften ist ersichtlich, dass weder die Heizschicht noch die Kontaktierungsschicht durchgängige metallische Strukturen aufweisen darf (etwa Leitungsdrähte, Elektroden, oder Heizdrähte), da die Schichten infolge der Eigensteifigkeit dieser Strukturen in ihrer Dehnfähigkeit zu stark begrenzt wären, so dass die erforderliche Verformbarkeit nicht bestünde.

Für den bevorzugten Fall einer als Heizwiderstand eingesetzten Schicht kann diese einen elektrischen Widerstand aufweisen, der einerseits hoch genug ist, um eine Erwärmung der Schicht zu ermöglichen, andererseits niedrig genug ist, um einen Stromfluss durch die Schicht überhaupt zu etablieren.

Zur Verwirklichung der vorliegenden Erfindung sind als erste Polymermasse und als zweite Polymermasse grundsätzlich alle Polymermasse einsetzbar, die eine hinreichende elektrische Leitfähigkeit aufweisen und einen durch diese Polymermasse fließenden elektrischen Strom im wesentlichen zersetzungsfrei leiten und die zudem die efindungsgemäß erforderlichen Merkmale aufweisen, insbesondere im Hinblick auf ihre Reißdehnung und auf ihren Zug-Elastizitätsmodul. Polymermassen mit entsprechender Reißdehnung und entsprechendem Zug-Elastizitätsmodul sind dem Fachmann hinlänglich bekannt; diese können hinsichtlich der weiteren geforderten Eigenschaften - etwa der elektrischen Leitfähigkeit - durch Maßnahmen angepasst werden, die dem Fachmann ebenfalls hinreichend bekannt sind.

So sind aufgrund ihrer mechanischen und thermischen Eigenschaften als erste Polymermasse und als zweite Polymermasse beispielsweise Polymermassen besonders geeignet, deren Basispolymere Fluorpolymere, Chlorpolymere, Silikone, Polyamide, Polyolefine und deren Copolymere, Polyarylene, Polyacrylnitrile, Ethylen-Propen-Dien-Monomer-Kautschuke (EPDM), Nitrilkautschuke und Mischungen oder Copolymere derselben sind. Ganz besonders geeignet sind Elastomere auf Basis der genannten Polymertypen, aber auch Wachse können Verwendung finden. Dabei ist es möglich, die elastischen und plastischen Eigenschaften gezielt durch Zuschlagstoffe wie zum Beispiel Lösemittel, Weichmacher (Plastifizierungsmittel), Harze, Vernetzer, Treibmittel und/oder Füllstoffe einzustellen.

Insbesondere können die erste Polymermasse und die zweite Polymermasse mindestens eine Klebemasse umfassen, so dass es sich bei den Polymermassen um klebende Polymermassen (Klebemassen) handelt. Unter diesen seien insbesondere Selbstklebemassen genannt, also Haftklebemassen und Heißschmelzklebemassen.

Als Haftklebemassen werden solche Klebemassen bezeichnet, die bei Raumtemperatur bereits unter relativ schwachem Andruck eine dauerhafte Verklebung mit dem Substrat erlauben. Im Gegensatz dazu werden als Heißschmelzklebemassen solche Klebemassen bezeichnet, die erst bei erhöhten Temperaturen eine dauerhafte Verklebung mit dem Substrat eingehen, wobei die so erhaltene Verklebung auch bei einem anschließenden Abkühlen der Verklebung auf Raumtemperatur noch erhalten bleibt. Die Verklebbarkeit von Haftklebemassen wie auch von Heißschmelzklebemassen beruht auf ihren adhäsiven Eigenschaften.

Als Adhäsion wird üblicherweise der physikalische Effekt bezeichnet, der den Zusammenhalt zweier miteinander in Kontakt gebrachter Phasen an ihrer Grenzfläche aufgrund dort auftretender intermolekularer Wechselwirkungen bewirkt. Die Adhäsion bestimmt somit das Anhaften der Klebemasse an der Substratoberfläche und ist als Anfassklebrigkeit (dem so genannten Tack) und als Klebkraft bestimmbar. Um die Adhäsion einer Klebemasse gezielt zu beeinflussen, werden der Klebemasse häufig Weichmacher und/oder klebkraftsteigernde Harze (so genannte Tackifier) zugesetzt.

Als Kohäsion bezeichnet man üblicherweise den physikalischen Effekt, der den inneren Zusammenhalt eines Stoffs oder Stoffgemisches aufgrund intermolekularer und/oder intramolekularer Wechselwirkungen zur Folge hat. Die Kohäsionskräfte bestimmen somit die Zähflüssigkeit und Fließfähigkeit der Klebemasse, die sich etwa als Viskosität und als Scherstandzeit bestimmen lassen. Um die Kohäsion einer Klebemasse gezielt zu erhöhen, werden diese häufig einer zusätzlichen Vernetzung unterzogen, wofür der Klebemasse reaktive (und somit vernetzbare) Bestandteile oder andere chemische Vernetzer zugesetzt werden und/oder die Klebemasse in einer Nachbehandlung aktinischen (energiereichen) Strahlen ausgesetzt wird.

Die klebtechnischen Eigenschaften einer Haftklebemasse werden in erster Linie von dem Verhältnis adhäsiver und kohäsiver Eigenschaften bestimmt. So ist es beispielsweise für einige Anwendungen wichtig, dass die eingesetzten Klebemassen hochkohäsiv sind, also über einen besonders starken inneren Zusammenhalt verfügen, während für andere Anwendungen eine besonders hohe Adhäsion erforderlich ist.

Optional kann entweder eine der beiden Polymermassen oder aber können beide Polymermassen Haftklebemassen sein. Stattdessen kann auch eine der beiden Polymermassen oder aber können beide Polymermassen Heißschmelzklebemassen sein. Dabei ist es natürlich auch möglich, dass eine der beiden Klebemassen eine Haftklebemasse und die andere eine Heißschmelzklebemasse ist, also dass entweder die erste Polymermasse eine Haftklebemasse ist und die zweite Polymermasse eine Heißschmelzklebemasse ist oder dass die erste Polymermasse eine Heißschmelzklebemasse ist und die zweite Polymermasse eine Haftklebemasse ist.

Als Haftklebemassen kommen grundsätzlich alle Haftklebemassesysteme mit geeigneten haftklebenden Eigenschaften in Frage, also haftklebrige Systeme. Die zur Herstellung der Haftklebemassen dienenden Monomere werden insbesondere dermaßen gewählt, dass die resultierenden Polymere bei Raumtemperatur oder höheren Temperaturen als Haftklebemassen eingesetzt werden können.

Haftklebrig im Sinne der vorliegenden Erfindung ist eine Klebemasse, wenn sie entsprechend "Handbook of Pressure Sensitive Adhesive Technology" von Donatas Satas (van Nostrand, New York 1989) haftklebende Eigenschaften besitzt.

Zur Erzielung einer für Haftklebemassen bevorzugten Glasübergangstemperatur Tag der Polymere von $T_G \leq$ 25 °C werden die Monomere üblicherweise derart ausgesucht und die mengenmäßige Zusammensetzung der Monomermischung derart gewählt, dass diese sich in Analogie zu der von Fox vorgestellten Gleichung so verhalten (vgl. T.G. Fox, Bull. Am. Phys. Soc. 1 (1956) 123), dass sich der gewünschte Wert für die Glasübergangstemperatur $T_G$ des resultierenden Polymers ergibt nach

$$\frac{1}{T_G} = \sum_n \frac{w_n}{T_{G,n}} \qquad\qquad (G1)$$

Hierin repräsentiert n die Laufzahl über die eingesetzten Monomere, $w_n$ den Massenanteil des jeweiligen Monomers n in Gew.-% und $T_{G,n}$ die jeweilige Glasübergangstemperatur des Homopolymers aus den jeweiligen Monomeren n in K.

Als Haftklebemassen für die erste Polymermasse und/oder die zweite Polymermasse kommen daher beispielsweise Haftklebemassen auf der Basis von Acrylaten und/oder Methacrylaten, Naturkautschuken und/oder Synthesekautschuken in Frage.

So lassen sich Haftklebemassen auf Basis von Acrylsäure und/oder Methacrylsäure und/oder auf Basis von Estern der vorgenannten Verbindungen einsetzen oder solche auf Basis von hydrierten Natur- oder Synthesekautschuken, da diese besonders alterungsstabil sind und somit wiederholten Heizprozessen des erfindungsgemäßen Flächenelements langzeitig standzuhalten vermögen.

Es sind insbesondere Acrylathaftklebemassen geeignet, die etwa durch radikalische Polymerisation erhältlich sind und die zumindest teilweise auf mindestens einem Acrylmonomer der allgemeinen Formel $CH_2=C(R^1)(COOR^2)$ basieren, wobei $R^1$ gleich H oder ein $CH_3$-Rest ist und $R^2$ gleich H ist oder aus der Gruppe der gesättigten, unverzweigten oder verzweigten, substituierten oder unsubstituierten $C_1$- bis $C_{30}$-Alkylreste gewählt ist. Das mindestens eine Acrylmonomer sollte einen Massenanteil von mindestens 50 Gew.-% in der polymeren Phase der Haftklebemasse aufweisen.

Es lassen sich nach einer besonders vorteilhaften Ausgestaltung ferner Polymere einsetzen, die

(a1) zumindest teilweise auf mindestens einem Acrylmonomer der allgemeinen Formel $CH_2=C(R^1)(COOR^{2'})$ basieren, wobei $R^1$ gleich H oder ein $CH_3$-Rest ist und $R^{2'}$ aus der Gruppe der gesättigten, unverzweigten oder verzweigten, substituierten oder unsubstituierten $C_2$- bis $C_{20}$-Alkylreste gewählt ist, und

(a2) zumindest teilweise auf einem mit dem mindestens einen Acrylmonomer polymerisierbaren Comonomer basieren, das insbesondere aus Vinylverbindungen mit funktionellen Gruppen, Maleinsäureanhydrid, Styrol, Styrol-Verbindungen, Vinylacetat, Acrylamiden und mit Doppelbindung funktionalisierten Photoinitiatoren gewählt werden kann.

Dabei weist vorzugsweise das mindestens eine Acrylmonomer (a1) einen Massenanteil von 65 Gew.-% bis 100 Gew.-% und das mindestens eine Comonomer (a2) einen Massenanteil von 0 Gew.-% bis 35 Gew.-% in der polymeren Phase der Selbstklebemasse auf.

Es hat sich ferner eine mittlere molekulare Masse $M_w$ (Gewichtsmittel) der Selbstklebemasse von maximal 800.000 g/mol als vorteilhaft erwiesen, insbesondere im Hinblick auf die gewünschten mechanischen Eigenschaften der Haftklebemasse.

Die mindestens eine Selbstklebemasse kann nach einer weiteren Ausführung auch Natur- oder Synthesekautschukmassen umfassen oder auf solchen basieren. Für eine Selbstklebemasse aus Naturkautschuk wird der Naturkautschuk bis zu einem frei wählbaren Molekulargewicht gemahlen und mit die Klebkraft steigemden Füllstoffen (zum Beispiel Klebharzen) sowie mit elektrisch leitenden Füllstoffen additiviert. Für eine besondere Ausführung können auch teilkristalline Polymere wie EVA (Ethylenvinylacetat) als Selbstklebemasse eingesetzt oder zu dieser hinzugefügt werden.

In bevorzugter Weise werden Acryl- oder Methacrylmonomere der allgemeinen Formel $CH_2=C(R^1)(COOR^{2''})$ eingesetzt, die Acryl- und Methacrylsäureester umfassen, wobei die Gruppe $R^1$ aus den zuvor bereits beschriebenen Verbindungen und die Gruppe $R^{2''}$ aus der Gruppe der gesättigten, unverzweigten oder verzweigten, substituierten oder unsubstituierten $C_4$- bis $C_{14}$-Alkylresten, insbesondere $C_4$- bis $C_9$-Alkylresten, gewählt ist. Spezifische Beispiele, ohne sich durch diese Aufzählung einschränken zu wollen, sind Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat und deren verzweigten Isomere, beispielsweise Isobutylacrylat, 2-Ethylhexylacrylat, 2-Ethylhexylmethacrylat, Isooctylacrylat oder Isooctylmethacrylat.

Weitere einsetzbare Verbindungsklassen sind monofunktionelle. Acrylate bzw. Methacrylate der allgemeinen Formel $CH_2=C(R^1)(eOOR^{2'''})$, wobei die Gruppe $R^1$ aus den zuvor bereits beschriebenen Verbindungen und die Gruppe $R^{2'''}$ aus der Gruppe der überbrückten oder nicht überbrückten Cycloalkylreste mit mindestens 6 C-Atomen gewählt ist. Die Cycloalkylreste können auch substituiert sein, beispielsweise durch $C_1$- bis $C_6$-Alkylgruppen, Halogenatome oder Cyanogruppen. Spezifische Beispiele sind Cyclohexylmethacrylat, Isobomylacrylat, Isobomylmethacrylat und 3,5-Dimethyladamantylacrylat.

In einer bevorzugten Vorgehensweise werden Acrylmonomere und/oder Comonomere eingesetzt, die einen oder mehrere Substituenten aufweisen, insbesondere polare Substituenten, beispielsweise Carboxyl-, Sulfonsäure-, Phosphonsäure-, Hydroxyl-, Lactam-, Lacton-, N-substituierte Amid-, N-substituierte Amin-, Carbamat-, Epoxy-, Thiol-, Alkoxy-, Cyan-, Halogenid- und Ethergruppen.

Sehr vorteilhaft im Sinne des Acrylmonomers (a1) eignen sich Monomere, die aus der folgenden Gruppe ausgewählt sind: substituierte oder unsubstituierte Verbindungen umfassend Methylacrylat, Methylmethacrylat, Ethylacrylat, n-Butylacrylat, n-Butylmethacrylat, n-Pentylacrylat, n-Hexylacrylat, n-Heptylacrylat, n-Octylacrylat, n-Octylmethacrylat, n-Nonylacrylat, Laurylacrylat, Stearylacrylat, Behenylacrylat, Isobutylacrylat, 2-Ethylhexylacrylat, 2-Ethylhexylmethacrylat, Isooctylacrylat, Isooctylmethacrylat, Cyclohexylmethacrylat, Isobornylacrylat, Isobomylmethacrylat, und 3,5-Dimethyladamantylacrylat.

Geeignet sind ebenfalls moderat basische Comonomere (a2) wie einfach oder zweifach N-alkylsubstituierte Amide, insbesondere Acrylamide. Spezifische Beispiele sind hier N,N-Dimethylacrylamid, N,N-Dimethylmethacrylamid, N-tert-Butylacrylamid, N-Vinylpyrrolidon, N-Vinyllactam, Dimethylaminoethylacrylat, Dimethylaminoethylmethacrylat, Diethylaminoethylacrylat, Diethylaminoethylmethacrylat, N-Methylolacrylamid, N-Methylolmethacrylamid, N-(Butoxymethyl)methacrylamid, N-(Ethoxymethyl)acrylamid, N-Isopropylacrylamid, wobei auch diese Aufzählung nicht abschließend ist.

Weitere bevorzugte Beispiele für Comonomere (a2) sind Hydroxyethylacrylat, Hydroxyethylmethacrylat, Hydroxypropylacrylat, Hydroxypropylmethacrylat, Allylalkohol, Maleinsäureanhydrid, Itaconsäureanhydrid, Itaconsäure, Glyceridylmethacrylat, Phenoxyethylacrylat, Phenoxyethylmethacrylat, 2-Butoxyethylacrylat, 2-Butoxyethylmethacrylat, Cyanoethylacrylat, Cyanoethylmethacrylat, Glycerylmethacrylat, 6-Hydroxyhexylmethacrylat, Vinylessigsäure, Tetrahydrofurfurylacrylat, beta-Acryloyloxypropionsäure, Trichloracrylsäure, Fumarsäure, Crotonsäure, Aconitsäure, Dimethylacrylsäure, wobei diese Aufzählung nicht abschließend ist.

In einer weiteren bevorzugten Vorgehensweise werden als Comonomere (a2) Vinylverbindungen, insbesondere Vinylester, Vinylether, Vinylhalogenide, Vinylidenhalogenide, Vinylverbindungen mit aromatischen Cyclen und Heterocyclen in Alphastellung eingesetzt, wobei als nicht ausschließend Beispiele etwa Vinylacetat, Vinylformamid, Vinylpyridin, Ethylvinylether, Vinylchlorid, Vinylidenchlorid, Styrol und Acrylnitril genannt seien.

Besonders vorteilhaft kann das mindestens eine Comonomer (a2) ein Photoinitiator mit einer copolymerisierbaren Doppelbindung sein, insbesondere ausgewählt aus der Gruppe enthaltend Norrish-I-Photoinitiatoren oder Norrish-II-Photoinitiatoren, Benzoinacrylate oder acrylierte Benzophenone.

In einer weiteren bevorzugten Vorgehensweise werden zu den beschriebenen Comonomeren (a2) zusätzliche Monomere hinzugesetzt, die eine hohe statische Glasübergangstemperatur besitzen. Als derartige zusätzliche Monomere eigenen sich aromatische Vinylverbindungen wie etwa Styrol, wobei bevorzugt die aromatischen Kerne aus $C_4$- bis $C_{18}$-Bausteinen bestehen und auch Heteroatome enthalten können. Besonders bevorzugte Beispiele sind 4-Vinylpyridin, N-Vinylphthalimid, Methylstyrol, 3,4-Dimethoxystyrol, 4-Vinylbenzoesäure, Benzylacrylat, Benzylmethacrylat, Phenylacrylat, Phenylmethacrylat, t-Butylphenylacrylat, t-Butylphenylmethacrylat, 4-Biphenylacrylat und 4-Biphenylmethacrylat, 2-Naphthylacrylat und 2-Naphthylmethacrylat sowie Mischungen aus diesen Monomeren, wobei auch diese Aufzählung nicht abschließend ist.

Anstelle von oder zusätzlich zu Haftklebemassen kann das erfindungsgemäße Flächenelement für die erste Polymermasse und/oder die zweite Polymermasse Heißschmelzklebemassen enthalten. Als Heißschmelzklebemassen kommen grundsätzlich alle Heißschmelzklebemassesysteme mit geeigneten heißschmelzklebenden Eigenschaften in Frage, also heißschmelzklebrige Systeme. Heißschmelzklebrig im Sinne der vorliegenden Erfindung ist ein erfindungsgemäßes Flächenelement, wenn nach der schmelzeförmigen Applikation auf den Haftgrund und anschließendem Abkühlen die Klebkraft bei Raumtemperatur nach ASTM D 3330-04 (bei einer Abzugsgeschwindigkeit von 300 mm/min auf dem zu verklebenden Haftgrund) größer als 1 N/cm ist, insbesondere größer ist als 3 N/cm oder sogar größer als 5 N/cm.

Als Heißschmelzklebemassen können alle üblichen und geeigneten Heißschmelzklebemassen eingesetzt werden, beispielsweise solche auf der Basis von Polyolefinen und Copolymeren von Polyolefinen sowie deren säuremodifizierten Derivate, Ionomeren, Polyamiden und deren Copolymeren sowie Blockcopolymeren wie Styrol-Blockcopolymeren.

Eine Polymermasse, insbesondere eine Selbstklebemasse, kann selbstverständlich weitere Rezeptierungsbestandteile und/oder Zuschlagsstoffe umfassen wie zum Beispiel

Hilfsstoffe, Pigmente, rheologische Additive, Additive zur Verbesserung der Haftung, Weichmacher (Plastifizierungsmittel), Harze, Elastomere, Alterungsschutzmittel (Antioxidantien), Lichtschutzmittel, UV-Absorber sowie sonstige Hilfs- und Zusatzstoffe, beispielsweise Trockenmittel (etwa Molekularsieb-Zeolithe oder Calciumoxid), Fließ- und Verlaufmittel, Benetzer wie Tenside oder Katalysatoren sowie wärmeleitende Füllstoffe, Wärme speichernde Füllstoffe oder Zuschlagstoffe, die durch Wärme freigesetzt werden oder deren Freisetzung durch Wärme unterstützt wird.

Als Hilfsstoffe können alle fein gemahlenen festen Zusatzstoffe wie zum Beispiel Kreide, Magnesiumcarbonat, Zinkcarbonat, Kaolin, Bariumsulfat, Titandioxid oder Calciumoxid eingesetzt werden. Weitere Beispiele sind Talkum, Glimmer, Kieselsäure, Silikate oder Zinkoxid. Natürlich können auch Mischungen der genannten Stoffe eingesetzt werden.

Die eingesetzten Pigmente können organischer oder anorganischer Natur sein. Es kommen alle Arten organischer oder anorganischer Farbpigmente in Frage, beispielsweise Weißpigmente wie Titandioxid zur Verbesserung der Licht- und UV-Stabilität oder Metallpigmente.

Beispiele für rheologische Additive sind pyrogene Kieselsäuren, Schichtsilikate (beispielsweise Bentonite), hochmolekulare Polyamid pulver oder Pulver auf der Basis von Rhizinusölderivaten.

Additive zur Verbesserung der Haftung können zum Beispiel Stoffe aus den Gruppen der Polyamide, Epoxide oder Silane sein.

Beispiele für Weichmacher zur Verbesserung der Klebfähigkeit sind Phthalsäureester, Trimellitsäureester, Phosphorsäureester, Adipinsäureester sowie Ester anderer acyclischer Dicarbonsäuren, Fettsäureester, Hydroxycarbonsäureester, Alkylsulfonsäureester des Phenols, aliphatische, cycloaliphatische und aromatische Mineralöle, Kohlenwasserstoffe, flüssige oder halbfeste Kautschuke (zum Beispiel Nitrilkautschuke oder Polyisoprenkautschuke), flüssige oder halbfeste Polymerisate aus Buten und/oder Isobuten, Acrylsäureester, Polyvinylether, Flüssig- und Weichharze auf Basis der Rohstoffe, die auch die Basis für klebrigmachende Harze darstellen, Wollwachs und andere Wachse, Silikone sowie Polymerweichmacher wie etwa Polyester oder Polyurethane.

Zuschlagstoffe, die durch Wärme freigesetzt werden oder deren Freisetzung durch Wärme unterstützt wird, sind solche Systeme, die einen aktiven Stoff enthalten, der infolge der Einwirkung von Wärme freigesetzt oder aktiviert wird, so dass eine kontrollierte Abgabe dieses aktiven Stoffs möglich ist. Als aktiver Stoff kommt hierbei jeder Stoff in Frage, der bei der thermischen Freisetzung oder Aktivierung eine besondere Wirkung entfaltet, beispielsweise ein Farbstoff, ein medizinischer oder kosmetischer Wirkstoff oder ein Sprengzünder (Initialsprengstoff). Die Wirkung kann etwa infolge der Freisetzung des Stoffs (zum Beispiel bei einem topisch anwendbaren Wirkstoff) oder bei einer thermischen Aktivierung eintreten, etwa einer thermisch initiierten chemischen Reaktion (beispielsweise einer molekularen Umlagerung, einer Vernetzungsreaktion oder einer Zersetzung) oder einem thermisch initiierten physikalischen Vorgang (beispielsweise einer Adsorption/Desorption oder einem Phasenübergang). Beispielsweise kann es sich bei dem durch Wärme freisetzbaren Zuschlagstoff um einen in einer schmelzbaren Matrix verkapselten topisch anwendbaren medizinischen Wirkstoff handeln.

Die Rezeptierung der Polymermasse mit weiteren Bestandteilen wie zum Beispiel Hilfsstoffen und Weichmachern, ist ebenfalls Stand der Technik.

Zur Optimierung der klebtechnischen Eigenschaften können erfindungsgemäß einer Selbstklebemasse Harze beigemischt werden. Als zuzusetzende klebrigmachende Harze (die Klebkraft steigende Harze) sind ausnahmslos alle vorbekannten und in der Literatur beschriebenen Klebharze einsetzbar. Genannt seien stellvertretend die Pinenharze, Indenharze und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie $C_5$- bis $C_9$- sowie andere Kohlenwasserstoffharze. Beliebige Kombinationen dieser und weiterer Harze können eingesetzt werden, um die Eigenschaften der resultierenden Klebemasse wunschgemäß einzustellen. Im Allgemeinen lassen sich alle mit dem entsprechenden Basispolymer kompatiblen (löslichen) Harze einsetzen, insbesondere sei verwiesen auf alle aliphatischen, aromatischen, alkylaromatischen Kohlenwasserstoffharze, Kohlenwasserstoffharze auf Basis reiner Monomere, hydrierte Kohlenwasserstoffharze, funktionelle Kohlenwasserstoffharze sowie Naturharze. In einer bevorzugten Auslegung werden Harze eingesetzt, die die elektrische Leitfähigkeit und die Erwärmbarkeit nicht vermindern, auch nicht über einen längeren Zeitraum.

Eine weitere vorteilhafte Ausgestaltung des Flächenelements kann durch Zugabe von einem Wärme speichernden Füllstoff zu zumindest einer der Schichten erreicht werden. Als Wärme speichernder Füllstoff wird vorliegend jeder Füllstoff mit einer hohen Wärmekapazität verstanden, insbesondere mit einer Wärmekapazität von mehr als 0,7 J/gK. Infolge der thermischen Pufferwirkung dieser Substanzen kann so ein gleichmäßiger Verlauf beim Aufheizen der Heizschicht (und der damit in thermischen Kontakt stehenden Kontaktierungsschicht) sowie eine verlängerte und gleichmäßige Wärmeabgabe nach Beendigung des aktiven Wärmeerzeugungsprozesses erzielt werden. Füllstoffe mit hoher Wärmekapazität, die vorteilhaft eingesetzt werden können, sind etwa Aluminium, Beryllium, Bor, Calcium, Eisen, Graphit, Kalium, Kupfer, Magnesium, Phosphor oder Verbindungen der vorgenannten Stoffe, insbesondere Aluminiumoxid und Aluminiumchlorid, Calciumcarbonat, Calciumchlorid, Kupfersulfat, Magnetit, Haematit, Magnesiumcarbonat und Magnesiumchlorid, Phosphorchlorid oder Phosphoroxid (wobei diese Stoffe darüber hinaus auch weitere Funktionen innerhalb des Flächenelements erfüllen können, etwa Kalium oder Phosphor bei Sprengzündern).

Vorteilhaft ist es auch, wenn zumindest eine der Polymermassen eine hohe Wärmeleitfähigkeit aufweist, insbesondere von mindestens 0;5 W/m·K, ganz besonders bevorzugt von mehr als 1 W/m·K. Dies kann etwa durch Zugabe von wärmeleitenden Füllstoffen erreicht werden, insbesondere von elektrisch isolierenden aber hochwärmeleitenden Füllstoffen wie etwa Bornitrid oder Aluminiumoxid, da durch letztere die elektrischen Eigenschaften nicht beeinflusst werden. Jedoch sind auch elektrisch leitende Füllstoffe mit hoher Wärmeleitfähigkeit einsetzbar, beispielsweise Silber, Aluminium oder Kupfer. Durch besonders wärmeleitfähige Polymermassen kann die zum Aufschmelzen einer heißschmelzklebrigen Polymermasse erforderliche Energie besser eingebracht werden, was etwa zu verkürzten Zykluszeiten beim Aufbringen des erfindungsgemäßen Flächenelements auf das Verklebungssubstrat führt. Zudem kann bei einer Verwendung derartiger Polymermassen zügig eine gleichmäßige Temperaturverteilung über die gesamte Fläche des Heizelements erreicht werden.

Im Sinne der vorliegenden Erfindung kann die Zusammensetzung der ersten Polymermasse mit der Zusammensetzung der zweiten Polymermasse identisch oder von dieser verschieden sein.

Erfindungsgemäß müssen die erste Polymermasse und die zweite Polymermasse einen hinreichend geringen Widerstand aufweisen und elektrischen Strom zumindest im Wesentlichen zersetzungsfrei leiten. Dies kann mit allen hierfür üblichen Maßnahmen erreicht werden. So können die Polymermassen beispielsweise intrinsisch leitende Polymere enthalten (als Basispolymer oder als zusätzlichen Rezeptierungsbestandteil). Besonders günstig ist es allerdings, wenn die Polymermassen elektrisch leitende Füllstoffe enthalten. Ein elektrisch leitender (elektrisch leitfähiger) Füllstoff ist eine Beimengung zu einer Polymermasse, die elektrischen Strom entweder bereits für sich alleine (also ohne Polymermasse) leitet oder auch erst in der Mischung mit der Polymermasse.

Als elektrisch leitende Füllstoffe sind grundsätzlich alle geeigneten elektrisch leitenden Füllstoffe einsetzbar, die mit der jeweiligen Polymermasse kompatibel sind. Insbesondere werden hierfür Füllstoffe eingesetzt, die ausgewählt sind aus der Gruppe umfassend Graphit und Ruß, insbesondere Leitruß (beispielsweise Printex® XE der Fa. Degussa), sowie beliebige Kombinationen davon. Zusätzlich oder stattdessen können bevorzugt auch andere Füllstoffe auf Kohlenstoffbasis eingesetzt werden, insbesondere solche, die nanoskalig sind, also in mindestens einer Raumdimension eine Ausdehnung von nicht mehr als 500 nm, bevorzugt von weniger als 200 nm oder sogar von weniger als 50 nm aufweisen, zum Beispiel Kohlenstoff-Nanoteilchen wie Kohlenstoff-Nanoröhren (beispielsweise Carbon Nanotubes der Fa. Ahwahnee oder Carbon-Nanotube-Masterbatches der Fa. Hyperion Catalysis), Kohlenstoff-Nanofasern (carbon nanofibres), Fullerene und dergleichen.

Vorteilhafterweise wird der Füllstoff in einer derartigen Menge eingesetzt, dass der Anteil des Füllstoffs in der jeweiligen Polymermasse groß genug ist, um einen hinreichend hohen oder niedrigen Widerstand der Polymermasse zu gewährleisten, andererseits aber gering genug ist, um die mechanischen Eigenschaften der ersten Polymermasse nur wenig zu beeinträchtigen. Weiterhin können die Füllstoffe oberflächenmodifiziert eingesetzt werden. Dadurch kann gezielt auf einzelne Eigenschaften der ersten Polymermasse Einfluss genommen werden, etwa, um die Dispergierbarkeit von Kohlenstoff-Nanoröhren oder Ruß in der Polymermasse zu verbessern.

Die Leitfähigkeit der Polymermassen ist unter anderem abhängig vom Füllgrad des elektrisch leitenden Füllstoffs, das heißt dessen Massenanteil in der Polymermasse. Dies hat sowohl Auswirkungen auf die Leitfähigkeit der zweiten Polymermasse wie auch auf die erzielbare Temperatur und Aufheizrate der Heizschicht. Durch Anheben des Füllgrades lassen sich höhere Leitfähigkeiten und gegebenenfalls auch höhere Temperaturen erreichen. Daneben ist die elektrische Leitfähigkeit einer Polymermasse ist auch von deren Basispolymer abhängig. So kann etwa die Ausprägung des Effektes der elektrischen Erwärmbarkeit der ersten Polymermasse durch den Füllgrad bestimmt werden. Der Füllgrad beträgt hier vorteilhafterweise zwischen 1 und 60 Gew.-%. Sehr bevorzugt werden zwischen 5 und 30 Gew.-% an Füllstoff eingesetzt.

Um eine elektrisch leitende Polymermasse zu erhalten, können die elektrisch leitenden Füllstoffe den Monomeren der Polymermasse vor der Polymerisation und/oder während der Polymerisation beigemischt werden und/oder mit den Polymeren erst nach Beendigung der Polymerisation vermengt werden. Vorzugsweise wird der elektrisch leitende Füllstoff nach der Polymerisation zu einer Schmelze eines Basispolymers der Polymermasse hinzugegeben.

Erfindungsgemäß bildet die erste Polymermasse die Heizschicht und die zweite Polymermasse die Kontaktierungsschicht. In einer bevorzugten Ausbildung ist die Heizschicht kaltleitend, so dass sie einen positiven Temperaturkoeffizienten aufweist und somit einen PTC-Effekt zeigt. Vorzugsweise ist ferner die Kontaktierungsschicht nicht kaltleitend.

Ein kaltleitendes Verhalten resultiert aus der Wahl einer geeigneten ersten Polymermasse. Dabei kann die erste Polymermasse hinsichtlich ihres positiven Temperaturkoeffizienten und des Widerstands so ausgelegt sein, dass für die jeweilige Betriebsspannung und den jeweiligen Betriebsstrom die Wärmeerzeugung in der Heizschicht durch den PTC-Effekt begrenzt wird, so dass sich die Schicht bezüglich der Wärmeentwicklung selbstregulierend verhält und insbesondere einen festgelegten Temperaturhöchstwert nicht überschreitet. Eine Überhitzung des Flächenelements kann somit vermieden werden.

Die Verwendung von derartigen kaltleitenden Materialien hat sich auch bereits im Automobilbau durchgesetzt. So werden für Automobilaußenspiegel beispielsweise mit Aluminium-Leiterflächen kontaktierte PTC-Elemente verklebt, die die Rückseite des Spiegelglases mit einer Trägerplatte im Halter des Automobilaußenspiegels verbinden. Wird nun eine Spannung an das PTC-Element angelegt, so heizt sich dieses infolge des Stromflusses auf. Als Kaltleiter werden in den aus dem Stand der Technik bekannten verklebbaren Heizelementen üblicherweise rußhaltige teilkristalline Thermoplaste wie etwa Polyethylen, Polyvinylidenfluorid, Hexafluorpropylen oder Tetrafluorethylen verwendet. Der Stand der Technik ist in DE 29 48 350 A1, EP 0 307 205 A1, EP 0 512 703 A1 sowie EP 0 852 801 A1 detailliert beschrieben. In der Verwendung als Spiegelheizung werden diese Kaltleiter in Form einer Tinte auf eine durchgängige Leiterfläche aufgebracht, die als elektrische Kontaktierungselektrode dient und die auf einer separaten Trägerfolie einer Stärke von üblicherweise 75 $\mu$m bis 250 $\mu$m angeordnet ist. Das in der Tinte enthaltene Lösungsmittel wird in einem abschließenden Trocknungsschritt entfernt. Derartige Tinten sind in EP 0 435 923 A1 ausführlich beschrieben.

Für die Heizschicht lassen sich in der ersten Polymermasse natürlich grundsätzlich alle Polymere mit geeigneten mechanischen Eigenschaften einsetzen, die einen PTC-Effekt aufweisen, sich also kaltleitend verhalten. Dabei hängen das Auftreten und das Ausmaß eines PTC-Effekts von einer Netzwerkausbildung ab, beispielsweise davon, ob der elektrisch leitende Füllstoff selber agglomeriert vorliegt oder nicht. Der PTC-Effekt lässt sich dabei unter anderem durch während des Herstellprozesses eingebrachte Orientierungen innerhalb der polymeren Bestandteile der ersten Polymermasse unterstützen, etwa, indem gezielt eine Anisotropie bezüglich physikalischer Eigenschaften und/oder bezüglich der Ausrichtung der Makromoleküle eingebracht wird.

Wird als kaltleitendes System eine Polymermasse mit einem elektrisch leitenden Füllstoff eingesetzt, dann hat es sich als vorteilhaft herausgestellt, mehrphasige Systeme zu verwenden, insbesondere solche, bei denen zumindest eine Phase in dem Temperaturbereich, in dem der PTC-Effekt auftritt, infolge der Erwärmung eine Volumenausdehnung erfährt, die nach allgemein anerkannter wissenschaftlicher Erklärung zumindest teilweise für das kaltleitende Verhalten verantwortlich ist (siehe J. Meyer in Polymer Engineering and Science, 13 (1973), S. 462 - 468). Als mehrphasig im Sinne der Erfindung werden auch Polymermassen auf der Basis von Polymeren oder Polymermischungen (so genannte Polymerblends) aufgefasst, die zusätzlich zu dem elektrisch leitenden Füllstoff einen oder mehrere weitere Füllstoffe aufweisen.

Als hinsichtlich des kaltleitenden Verhaltens besonders vorteilhaft hat sich hierbei der Einsatz von solchen Polymermassen herausgestellt, die teilkristalline Polymere aufweisen. Als teilkristalline Polymersysteme können sowohl einphasige als auch mehrphasige Systeme eingesetzt werden, sowohl Homopolymere als auch Copolymere, insbesondere teilkristalline Blockcopolymere. Die teilkristallinen Polymere können dabei ein Teil des Basispolymers selbst sein oder aber einen Zuschlagstoff darstellen. Die kristallinen Teilbereiche derartiger teilkristalliner Polymere weisen beim Erweichen der Polymermatrix eine stärkere Wärmeausdehnung auf als dessen amorphe Bereiche.

Bevorzugt enthält die erste Polymermasse in der Heizschicht mindestens 30 Gew.-% teilkristalliner Polymere, noch besser ist ein Anteil an teilkristallinen Polymeren von mindestens 50 Gew.-% in der ersten Polymermasse. Es wurde gefunden, dass insbesondere bei nichtklebenden Polymermassen sowie bei Heißschmelzklebemassen als erste Polymermasse die Eignung zur Erzielung des PTC-Effekts mit dem Anteil an teilkristallinen Polymeren überraschend stark zunimmt. Haftklebemassen verlieren hingegen mit zunehmendem teilkristallinen Anteil ihre haftklebrigen Eigenschaften, so dass bei Verwendung von Haftklebemassen der Anteil an teilkristallinen Polymeren niedriger zu halten ist als bei Heißschmelzklebemassen, um eine noch hinreichend hohe Haftklebrigkeit zu gewährleisten.

Demzufolge sind nichtklebende Polymermassen und Heißschmelzklebemassen für die Ausnutzung des PTC-Effekts über die Erwartungen hinaus gut geeignet. Als im erfinderischen Sinne besonders vorteilhaft haben sich dabei als erste Polymermasse Polymermassen aus teilkristallinen Polymeren herausgestellt, die in dem Basispolymer der Polymermasse zu 100 Gew.-% enthalten sind oder die in dem Basispolymer der Polymermasse zumindest zu nahezu 100 Gew.-% enthalten sind.

In einer Polymermasse als erster Polymermasse sind insbesondere solche teilkristallinen Polymere vorteilhaft, bei denen der Kristallinitätsgrad mehr als 20 % oder sogar mehr als 40 % beträgt. Der Kristallinitätsgrad lässt sich mit Hilfe der dynamischen Differenzkalorimetrie (Differential Scanhing Calorimetry; DSC) ermitteln.

So können als erste Polymermasse im Bereich der teilkristallinen Thermoplaste Polyolefine (beispielsweise Polyethylen niedriger Dichte) oder Copolymere von Polyolefinen (beispielsweise Ethylen-Vinylacetat (EVA), Ethylen-Acrylsäure (EAA), Ethylen-Methacrylsäure (EMAA), Ethylen-Ethylacrylat oder Ethylen-Butylacrylat), Ionomere, Polyamide und/oder deren Copolymere eingesetzt werden. Diese weisen neben einem ausreichend ausgeprägten PTC-Effekt auch besonders vorteilhafte Heißschmelzklebeeigenschaften auf, so dass diese bei einer ersten Polymermasse auf der Basis einer Heißschmelzklebemasse als Basispolymer eingesetzt werden können.

Weiterhin bevorzugt werden im Bereich der teilkristallinen Thermoplaste säuremodifizierte (beispielsweise mit Maleinsäure oder Maleinsäureanhydrid modifizierte) Polyolefine oder deren Copolymere, da diese besonders gut mit den elektrisch leitenden Füllstoffen wie etwa Ruß oder Kohlenstoff-Nanoröhren verträglich sind und sich bei Verwendung dieser Polymere besonders einfach homogene Dispersionen des Füllstoffs in der Polymermatrix herstellen lassen.

Ganz besonders bevorzugt werden als Blockcopolymere Styrol-Blockcopolymere wie etwa SBS (Styrol-Butadien-Styrol-Blockcopolymere), SIS (Styrol-Isopren-Styrol-Blockcopolymere), SEBS (Styrol-Ethylen-Butylen-Styrol-Blockcopolymere) oder SEPS (Styrol-Ethylen-Propylen-Styrol-Blockcopolymere) eingesetzt.

Vorteilhaft ist auch der Zusatz polymerer oder anorganischer Füllstoffe, die während der Erwärmung mit ihrem Aufschmelzen den PTC-Effekt unterstützen. Dies können beispielsweise hochkristalline Polyolefinwachse oder ionische Flüssigkeiten (niedrigschmelzende Metallsalze) sein. Durch die Wahl des Schmelzpunktes der Füllstoffe kann zudem die Temperatur eingestellt werden, bei der ein kaltleitendes Verhalten (PTC-Effekt) auftritt.

Zur Realisierung eines kaltleitenden Verhaltens kann darüber hinaus auch eine Kombination von verschiedenartigen elektrisch leitenden Füllstoffen vorteilhaft sein, da hiermit ausreichende Kaltleiteigenschaften bei einem möglichst geringen Füllgrad erreicht werden können, insbesondere bei der Kombination von Kohlenstoff-Nanoröhren mit Ruß oder Graphit.

Zur Steigerung des PTC-Effekts kann die Oberfläche der elektrisch leitenden Füllstoffe, etwa der Rußpartikel, vollständig oder teilweise mit Metallen wie Nickel, Silber oder Gold, mit Silanen oder mit Formamiden bedeckt werden.

Das Abmischen der Polymerphase einer Polymermasse mit dem elektrisch leitenden Füllstoff kann mit allen üblichen Mischungsverfahren erfolgen. Wird die Polymermasse etwa auf das erfindungsgemäße Flächenelement aus der Schmelze aufgetragen, so kann der elektrisch leitende Füllstoff bevorzugt direkt in die Schmelze eingebracht werden. Hierbei ist eine homogene Einarbeitung im erfindungsgemäßen Sinne wünschenswert. Homogene Verteilungen des Füllstoffs in der Polymermasse werden auch bevorzugt durch eine Kompoundierung in Doppelschneckenextrudern, kontinuierlichen Knetern (beispielsweise Buss-Kneter) oder Ptanetwatzenextrudern erreicht. Ein Vorteil dieses Prozesses ist eine nur kurzzeitige Kontaminierung des Herstellungsprozesses mit dem separaten Füllstoff sowie die Vermeidung von Lösungsmitteln.

Bevorzugt werden die für die erfindungsgemäßen Flächenelemente eingesetzten Polymermassen zusätzlich vernetzt. Insbesondere für die erste Polymermasse werden dabei häufig hohe Vernetzungsgrade angestrebt, die den PTC-Effekt verstärken (vergleiche EP 0 311 142 A1 sowie US 4 775 778 A) und daher in besonderem Maß geeignet sind. Eine Vernetzung beseitigt oder vermindert auch die Auswirkungen eines etwaigen NTC-Effekts (bei negativem Temperaturkoeffizienten; engl. negative temperature coefficient), der bisweilen bei Temperaturen oberhalb des Schmelzpunkts einer Polymermasse beobachtet wird.

So kann ein Basispolymer der ersten Polymermasse bevorzugt einen Vernetzungsgrad aufweisen, der mindestens einem Gelwert von 35 % entspricht, insbesondere einem Gelwert von mehr als 60 %. Als Gelwert wird vorliegend das Verhältnis von den Anteilen eines Basispolymers, die in einem geeigneten Lösungsmittel (beispielsweise Toluol oder Xylol) nicht löslich sind, zu der Summe aus löslichen Anteilen und nicht-löslichen Anteilen des Basispolymers verstanden.

Ein hoher Vernetzungsgrad kann etwa in einem Vernetzungsschritt mit Elektronenstrahlen erhalten werden. Typische Bestrahlungsvorrichtungen, die zum Einsatz kommen können, sind Linearkathodensysteme, Abtastsysteme (Scannersysteme) oder Segmentkathodensysteme, sofern es sich hierbei um Elektronenstrahlbeschleuniger handelt. Eine ausführliche Beschreibung des Standes der Technik und die wichtigsten Verfahrensparameter findet man bei Skelhome, "Etectron Beam Processing, in Chemistry and Technology of UV and EB Formulation for Coatings, Inks and Paints", Vol. 1, 1991, SITA, London. Typische Beschleunigungsspannungen liegen im Bereich zwischen 50 kV und 500 kV, vorzugsweise im Bereich zwischen 80 kV und 300 kV. Die angewandten Streudosen bewegen sich zwischen 5 kGy bis 150 kGy, insbesondere zwischen 20 kGy und 100 kGy. Es können auch andere Verfahren eingesetzt werden, die eine hochenergetische Bestrahlung ermöglichen.

Weiterhin kann eine Variation der elektrischen Leitfähigkeit der ersten Polymermasse und somit der thermischen Erwärmung über den Vernetzungsgrad bewirkt werden. Durch Erhöhen der bei einer Vernetzungsreaktion einwirkenden Elektronenstrahldosis (sowie damit einhergehend durch Erhöhen des Vernetzungsgrades) lässt sich generell die elektrische Leitfähigkeit erhöhen, so dass bei einem konstanten Stromfluss durch die Heizschicht des Flächenelements die erzielbare Temperatur der Polymermasse ansteigt. Ebenso lässt sich über den Vernetzungsgrad das kaltleitende Verhalten der ersten Polymermasse steuern.

Zur Verringerung der für eine Vernetzungsreaktion erforderlichen Strahlendosis können den Polymermassen zusätzlich Vernetzer und/oder Promotoren zur Vernetzung beigemischt werden, insbesondere solche, die thermisch oder mittels Elektronenstrahlen anregbar sind. Als thermisch aktivierbare Vernetzer werden bevorzugt bifunktionelle oder multifunktionelle Epoxide, Hydroxide, Isocyanate oder Silane beigemischt. Geeignete Vernetzer für die Elektronenstrahlvernetzung sind etwa bifunktionelle oder multifunktionelle Acrylate oder Methacrylate oder Triallylcyanurate sowie Triallylisocyanurate.

Das Flächenelement umfasst also mindestens eine Schicht, innerhalb derer Wärme erzeugt werden kann, sowie eine elektrisch leitende Schicht, die zumindest eine Elektrode (einen Pol) der Kontaktierungsschicht darstellt. Wichtig ist hierbei, dass die Heizschicht und auch die Kontaktierungsschicht verformbar sind. In der strukturell einfachsten Ausführung besteht ein Flächenelement aus lediglich zwei Schichten, einer Heizschicht aus einer Selbstklebemasse und einer Kontaktierungsschicht, wobei letztere in dieser strukturell einfachsten Ausführung entweder nicht-klebend (für ein einseitig verklebbares Flächenelement) oder aber ebenfalls als Selbstklebemasse ausgebildet sein kann (für ein doppelseitig verklebbares Flächenelement).

In der materialtechnisch einfachsten Ausführung bestehen die Heizschicht und die Kontaktierungsschicht aus Polymermassen, die sich lediglich im Hinblick auf ihren Gehalt an elektrisch leitenden Füllstoffen unterscheiden, ansonsten aber eine identische Zusammensetzung aufweisen.

In komplizierteren Strukturen kann das erfindungsgemäße Flächenelement zusätzlich zu der Heizschicht und der Kontaktierungsschicht weitere Schichten aufweisen. So ist es etwa möglich, dass das Flächenelement eine oder mehrere Schichten aus Klebemassen enthält, etwa, indem diejenige der beiden Seitenflächen der Kontaktierungsschicht, die nicht mit der Heizschicht in direktem Kontakt steht, selber nicht selbstklebend ausgebildet ist, sondern mit einer zusätzlichen Klebemasseschicht aus einer Selbstklebemasse in Kontakt steht. Als Klebemasseschicht wird jede Schicht bezeichnet, die eine Klebemasse enthält und zum klebenden Verbinden des Flächenelements mit einem Haftgrund angepasst ist. Desgleichen kann stattdessen oder zusätzlich an der Seitenfläche der Heizschicht, die von der Kontaktierungsschicht abgewandt ist, eine Selbstklebemasse vorgesehen sein. Als derartige Selbstklebemassen kommen grundsätzlich alle üblichen und geeigneten Haftklebemassen oder Heißschmelzklebemassen in Frage, insbesondere die zuvor für die erste Polymermasse und die zweite Polymermasse beschriebenen Selbstklebemassen, wobei diese dann allerdings nicht notwendigerweise elektrisch leitend ausgebildet sein müssen. Somit kann das erfindungsgemäße Flächenelement beispielsweise auch einen Aufbau aus einer Heizschicht und einer Kontaktierungsschicht umfassen, die beide nicht selbstklebrig ausgebildet sind, und an dessen Seitenfläche (Heizschicht und/oder Kontaktierungsschicht) eine Klebemasseschicht aufgetragen werden kann, um dort Selbstklebrigkeit zu erzielen.

In einer weiteren vorteilhaften Ausführung ist zumindest eine Schicht des erwärmbaren Flächenelements mit einem Mechanismus ausgestattet, der bei erstmaliger Erwärmung des Flächenelements zu einer Kohäsionserhöhung in der ersten Polymermasse, der zweiten Polymermasse und/oder gegebenenfalls in weiteren Selbstklebemassen führt. Dies kann beispielsweise über eine Erhöhung der Vernetzungsdichte durch eine thermisch initiierte Nachvernetzung erreicht werden, die insbesondere durch die (intrinsische) Erwärmung des Flächenelements selbst initiiert werden kann. Vorteilhafterweise wird ein solches Flächenelement daher derart verwendet, dass zunächst die Verklebung mit mindestens einem Verklebungssubstrat hergestellt wird und anschließend die erstmalige Erwärmung vorgenommen wird, während derer sich eine Verfestigung der Verklebung einstellt.

Das Flächenelement ist üblicherweise trägerfrei ausgebildet, da hierdurch eine maximale Verformbarkeit des Flächenelements insgesamt gewährleistet ist. Darüber hinaus kann in dem Flächenelement aber auch ein verformbarer permanenter Träger vorgesehen sein. Dieser permanente Träger kann etwa eingesetzt werden, um die mechanischen Eigenschaften wie beispielsweise die Durchstoßfestigkeit des Flächenelements insgesamt zu verbessern. Der permanente Träger kann dabei vollflächig geschlossen oder durchbrochen ausgebildet sein. Als derartige permanente Träger können alle geeigneten Trägermaterialien verwendet werden, etwa Folien aus elastischen oder thermoplastischen Kunststoffen, polymertextile Flächenelemente (beispielsweise Gewebe, Gelege, Gewirke, Vliese) oder Kombinationen aus solchen Materialien.

Um die erfindungsgemäß zu erzielende hervorragende Verformbarkeit des Flächenelements insgesamt zu gewährleisten, muss der Träger bei einer Dehngeschwindigkeit von 300 mm/min eine Reißdehnung von mehr als 20 % aufweisen, insbesondere von mehr als 50 % oder sogar von mehr als 100 %, und dabei außerdem einen Zug-Elastizitätsmodul von weniger als 1.000 MPa oder sogar von höchstens 100 MPa besitzen.

Im Hinblick auf polymertextile Trägersysteme ist ferner zu beachten, dass diese entsprechend der jeweiligen textilen Bindung zwar eine gute oder sogar hervorragende dreidimensionale Verformbarkeit aufweisen (so sind beispielsweise Gestricke im Vergleich zu Geweben erheblich dehnfähiger). Mit der besseren Verformbarkeit sind diese Systeme allerdings auch erheblich dicker, da hier die Dehnfähigkeit nicht durch das Fasermaterial selbst hergestellt wird, sondern lediglich durch die Querkontraktion des polymertextilen Verbunds erreicht wird, die im Wesentlichen in der Dickenrichtung erfolgt. Aufgrund der großen Dicke und der infolge hoher Querkontraktion nur geringen Maßhaltigkeit dieser polymertextilen Trägermaterialien kommen in der Regel bevorzugt folienartige Materialien zum Einsatz.

Vorteilhaft ist es dabei, wenn auch der permanente Träger zusätzlich zu seiner hohen Flexibilität eine hohe Wärmeleitfähigkeit aufweist, insbesondere eine Wärmeleitfähigkeit von mindestens 0,5 W/m·K oder sogar von mehr als 1 W/m·K. Besonders bevorzugte Materialien sind mit wärmeleitfähigen Füllstoffen wie etwa Bornitrid oder Aluminiumoxid gefüllte Polymere. Derartige permanente Träger weisen typischerweise eine Stärke von weniger als 50 $\mu$m auf, bevorzugt von weniger als 25 $\mu$m, um die Flexibilität des Aufbaus insgesamt nicht zu beeinträchtigen. Durch besonders wärmeleitfähige permanente Träger kann die zum Aufschmelzen einer Heißschmelzklebemasse erforderliche Energie besser eingebracht werden, was etwa zu verkürzten Zykluszeiten beim Aufbringen des erfindungsgemäßen Flächenelements auf das Verklebungssubstrat führt. In einer besonders vorteilhaften Ausführung ist der permanente Träger als polymerer Schaum ausgebildet, wodurch die Verformbarkeit des gesamten Flächenelements nicht wesentlich beeinträchtigt wird.

Darüber hinaus kann der permanente Träger auch elektrisch isolierend ausgebildet sein, etwa, um den Verwender des Flächenelements vor einem Kontakt mit stromführenden Teilen des Flächenelements zu schützen.

Ferner kann das Flächenelement an einer der selbstklebenden Seitenflächen und/oder gegebenenfalls auch an der anderen selbstklebenden Seitenfläche einen temporären Träger aufweisen. Als derartiger temporärer Träger kann jedes trennende Abdeckmaterial verwendet werden, etwa ein Trennpapier oder ein Prozessliner, der eine der äußeren Selbstklebemassen zumindest teilweise bedeckt. Als Abdeckmaterial eignen sich beispielsweise alle silikonisierten oder fluorierten Folien mit einer Releasewirkung, die rückstandsfrei wiederablösbar sind. Als Folienmaterialien seien hier nur beispielhaft PP (Polypropylen), BOPP (biaxial orientiertes Polypropylen), MOPP (monoaxial orientiertes Polypropylen), PET (Polyethylenterephthalat), PVC (Polyvinylchlorid), PUR (Polyurethan), PE (Polyethylen), PE/EVA (Polyethylen-Ethylenvinylacetat-Copolymere) und EPDM (Ethen-Propylen-Dien-Terpolymere) genannt. Weiterhin lassen sich auch Trennpapiere einsetzen, zum Beispiel Glassine-Papiere, Kraft-Papiere oder polyolefinisch beschichtete Papiere. Besonders vorteilhaft können auch hier Abdeckmaterialien eingesetzt werden, die selbst eine hohe Wärmeleitfähigkeit aufweisen, insbesondere eine Wärmeleitfähigkeit von mindestens 0,5 W/m·K oder sogar von mehr als 1 W/m·K. Besonders bevorzugte Materialien sind mit wärmeleitfähigen Füllstoffen wie etwa Bornitrid oder Aluminiumoxid gefüllte Polymere. Durch besonders wärmeleitfähige Abdeckmaterialien kann die zum Aufschmelzen einer Heißschmelzklebemasse erforderliche Energie besser eingebracht werden, was etwa zu verkürzten Zykluszeiten beim Aufbringen des erfindungsgemäßen Flächenelements auf das Verklebungssubstrat führt.

Zur Herstellung der erfindungsgemäßen Flächenelemente sind ohne Ausnahme alle bekannten und geeigneten Verfahren einsetzbar. So lassen sich die Polymermassen des erfindungsgemäßen Flächenelements mit den geläufigen Verfahren zur Herstellung polymerer Flächenelemente nach dem Stand der Technik herstellen. Dazu zählen etwa die Flachfolienextrusion, die Blasfolienextrusion, das Kalanderverfahren, die Beschichtung aus einer Lösung, aus einer Dispersion oder aus einer monomeren oder einer präpolymeren Vorstufe des Polymeren. Die so erhaltenen Flächenelemente haben typischerweise eine Gesamtstärke von maximal 1000 $\mu$m, insbesondere von 10 $\mu$m bis 400 $\mu$m oder

sogar von 30 μm bis 200 μm.

Zur Herstellung der Flächenelemente wird üblicherweise eine der beiden Polymermassen zunächst schichtförmig ausgebreitet, etwa auf einem permanenten Träger oder auf einem Fertigungsträger - einem so genannten Prozessliner -, der während des Verfahrens oder spätestens am Ende des Verfahrens wieder von dem Flächenelement getrennt wird. Auf diese Polymermasseschicht wird die andere Polymermasse aufgetragen. Abschließend kann gegebenenfalls eine weitere Selbstklebemasse auf die frei liegende Seitenfläche der Kontaktierungsschicht und/oder der Heizschicht aufgebracht werden, wozu der Fertigungsträger - falls erforderlich - zuvor von der Polymermasse entfernt werden kann.

Natürlich ist es auch möglich, das erfindungsgemäße Flächenelement in einem hiervon abweichenden beliebigen anderen Herstellungsverfahren zu erhalten, beispielsweise, indem die eine der beiden Polymermassen auf einen Träger (Fertigungsträger oder einen permanenten Träger) und die andere der beiden Polymermassen auf einen anderen Träger aufgetragen wird und die beiden Polymermassen anschließend miteinander verbunden werden, etwa in einem Laminierschritt. Gegebenenfalls kann anschließend eine weitere Selbstklebemasse auf den permanenten Träger oder auf eine der beiden Polymermassen aufgetragen werden, letzteres erst nach Entfernen des temporären Trägers.

Für das Auftragen der zweiten Polymermasse der Kontaktierungsschicht auf die erste Polymermasse oder gegebenenfalls auf einen Träger können alle bekannten Verfahren eingesetzt werden, etwa das Aufbringen (beispielsweise in einem Druckverfahren wie etwa Siebdruck) von elektrisch leitenden Tinten (Leittinten) und Druckfarben, Leitlacken oder Leitpasten, in denen das Polymer in Dispersion, Lösung oder Schmelze vorliegt, der Transfer von separat geformten Polymerschichten oder Polymerfolien mittels Heißprägen, Heißsiegeln, Aufkaschieren oder Auflaminieren oder das diskontinuierliche Aufbringen von Mischungen aus Polymeren und elektrisch leitenden Füllstoffen (beispielsweise Polymer-Ruß-Compounds), wobei in letzterem Fall die zweite Polymermasse der Kontaktierungsschicht eine Leitfähigkeit aufweisen sollte, die mindestens um den Faktor 10 höher ist als die Leitfähigkeit der intrinsisch erwärmbaren ersten Polymermasse.

Sind die erste Polymermasse und die zweite Polymermasse thermoplastische Polymere, so kann das Flächenelement auch mit einer dreidimensionalen Gestalt erzeugt werden, die über die Thermoformbarkeit der beiden Schichten erreicht wird. Ein derartiges dreidimensional geformtes Flächenelement kann Vorteile beim Verkleben auf einer entsprechend geformten Oberfläche eines Verklebungssubstrats bieten.

Die so erhaltenen Flächenelemente werden erfindungsgemäß zum Verbinden zweier Verklebungssubstrate miteinander oder auch zum Verbinden zweier unterschiedlicher Teilbereiche eines einzigen Verklebungssubstrats eingesetzt. Ist das Flächenelement doppelseitig selbstklebend ausgebildet, dann ist es dafür angepasst, die Oberflächen zweier Verklebungssubstrate miteinander klebend zu verbinden. Insbesondere findet das Flächenelement zur Verklebung von Verklebungssubstraten in der Fahrzeugindustrie Verwendung und wird etwa in Automobilen, Bussen, Eisenbahnen, Schiffen oder Flugzeugen eingesetzt.

Das erfindungsgemäße Flächenelement kann hierbei als Bestandteil eines Verklebungsverbunds vorliegend. Ein Verklebungsverbund ist vorliegend jeglicher mittels Verklebung erhaltener Verbund aus einem Flächenelement und mindestens einem Verklebungssubstrat, das entweder mit einer Seitenfläche des Flächenelements direkt oder über weitere Bestandteile verklebt ist. Vorteilhafterweise wird als Verklebungssubstrat eine Spiegelscheibe eingesetzt, insbesondere die Rückseite der verspiegelten Seite einer Spiegelscheibe, oder - im Falle eines transparenten Flächenelements - eine Sichtscheibe, beispielsweise ein Displayfenster oder eine Windschutzscheibe. Demzufolge wird das erfindungsgemäße Flächenelement zum Beheizen eines derartigen Verklebungsverbunds eingesetzt.

So kann das erfindungsgemäße Flächenelement etwa als Spiegelheizung (Außen- und Innenspiegel), in einer heizbaren Innenverkleidung (Befestigung, Geräuschdämmung, Heizung), zur Wischwasserbeheizung oder Einfriersicherung, für eine Tankbeheizung (insbesondere für Dieselfahrzeuge), für die Beheizung vor Kraftstoffleitungen (gleichzeitig als Befestigung), in einer Heizung für Enteisungssysteme (Tragflächenenteisung, gegebenenfalls einschließlich Befestigungsfunktionen), in einer Lenkradheizung, zur Heizungslufterwärmung (Zusatzheizung bei kaltem Motor) oder zur Ansaugluftvorwärmung (Verbrennungsluft) eingesetzt werden. Diese Aufzählung ist rein exemplarisch und die Anwendung des erfindungsgemäßen Flächenelements nicht allein auf diese konkreten Beispiele beschränkt.

Darüber hinaus lassen sich eine Vielzahl weiterer Anwendungen finden, zum Beispiel (ohne sich durch diese Auswahl einzuschränken) zum Vermeiden von Kondenswasser oder von Niederschlag auf Flächen (beispielsweise bei Badezimmerspiegeln, zur Befestigung und Heizung, als Antibeschlag-Kaschierung etwa für Badezimmeranwendungen, als beheizbare Fliesenklebefolie, an Korrektur- oder Sonnenbrillen oder in Brillenetuis), als Sitzheizung (beispielsweise in Automobilen, einschließlich einer integrierten Anwendung von Sitzheizung und Sitzbelegungssensor für Airbags), für Sitzgelegenheiten an Bushaltestellen, in Sportstadien, bei der Gastronomie im Außenbereich oder für Toilettensitze, in Heizdecken oder Heizmatten, in Warmhalteplatten (etwa solche für Lebensmittel und Speisen, aber auch in Hochgebirgskochern oder Hochgebirgsherden, insbesondere unter Verwendung von Solarzellen), in Schuhwärmern (etwa als Einlegesohle), in Bandheizungen (etwa für Rohrleitungen, Kessel und dergleichen), zur Raumbeheizung (beispielsweise in Wandheizungen, Fußbodenheizungen oder auch als faltbare Zeltheizung), in Wasserbettheizungen, in heizbaren Gehäusen (beispielsweise als so genannte Thermobox zur Temperierung des Gehäuseinhalts oder im Elektronikbereich, etwa um im Zusammenspiel mit einem Peltier-Element in HiFi-Anlagen eine konstante Temperatur zur gewährleisten), für Motorräder (beispielsweise als Lenkerheizung oder Sattelheizung), als Gewächshausheizung (beispielsweise als großflächige Strahlungsheizung oder Konvektionsheizung oder als kleinflächige lokale Heizung direkt an den Pflanzen, etwa als Wurzelheizung), für funktionell beheizbare Bekleidung

(beispielsweise in Motorradfahrerbekleidung, Autofahrerbekleidung oder Winterbekleidung), zum Beheizen und gegebenenfalls Befestigen von Anzeigesystemen (beispielsweise von LCDs, OLEDs und elektrophoretischen Displays, als Einfrierschutz für Displays in Kameras, Außenbereichsanzeigen oder in Kirchturmuhren, sowie auch zum Enteisen derselben), zum Beheizen von beheizten Außenschaltem, zur Dacherwärmung (beispielsweise als Abtauanlage für Dachflächen oder Dachrinnen), in Brutkästen (beispielsweise für Jungtiere, zum Ausbrüten von Eiern oder in Inkubatoren für menschliche Babies), in der medizinischen Therapie (beispielsweise in der Wärmetherapie, als Wärmepflaster sowie für transdermale therapeutische Systeme und für transdermale Medikamentierung, so genanntes transdermal drug delivery) oder als Sprengzünder.

Entsprechend der jeweils eingesetzten Selbstklebemasse wird dabei das Flächenelement lediglich unter Andruck an dem Verklebungssubstrat fixiert (im Falle einer Haftklebemasse) oder aber bei Einbringen von Wärme unter Andruck an dem Verklebungssubstrat fixiert (im Falle einer Heißschmelzklebemasse). Das Einbringen von Wärme erfolgt hierbei von außen; alternativ kann die zum Erzielen einer stabilen Verklebung erforderliche Wärme aber auch intrinsisch in der Heizschicht erzeugt werden.

Weitere Vorteile und Anwendungsmöglichkeiten gehen aus den Ausführungsbeispielen hervor, die anhand der beigefügten Zeichnungen im Folgenden näher beschrieben werden sollen. Dabei zeigt

Fig. 1 eine schematische Darstellung eines Längsschnitts durch ein aus dem Stand der Technik bekanntes beidseitig verklebbares Flächenelement;

Fig. 2 schematische Darstellungen eines Längsschnitts durch ein erfindungsgemäßes beidseitig verklebbares Flächenelement aus einer Kontaktierungsschicht und einer Heizschicht, wobei Teilabbildung a) das nicht verklebte Flächenelement und Teilabbildung b) das einseitig an einem Spiegelglas verklebte Flächenelement zeigt;

Fig. 3 eine schematische Darstellung eines erfindungsgemäßen beidseitig verklebbaren Flächenelements aus einer Heizschicht, einer durchbrochenen Kontaktierungsschicht mit doppelter Kammstruktur und einer Klebemasseschicht, wobei in der oberen Teilabbildung ein Längsschnitt durch das Flächenelement gezeigt ist und in der unteren Teilabbildung ein Horizontalschnitt durch das Flächenelement gezeigt ist;

Fig. 4 eine schematische Darstellung eines Längsschnitts durch ein erfindungsgemäßes einseitig verklebbares Flächenelement aus einem Träger, einer Kontaktierungsschicht und einer Heizschicht;

Fig. 5 eine schematische Darstellung eines Längsschnitts durch ein erfindungsgemäßes zweiseitig verklebbares Flächenelement aus einer Klebemasseschicht, einer Kontaktierungsschicht und einer Heizschicht; .

Fig. 6 eine schematische Darstellung eines Längsschnitts durch ein erfindungsgemäßes zweiseitig verklebbares Flächenelement aus einer Klebemasseschicht, einer Kontaktierungsschicht, einer Heizschicht und einem temporären Träger;

Fig. 7 eine Messdatenkurve, die den für unterschiedliche Temperaturen bestimmten Ohmschen Widerstand eines erfindungsgemäßen Flächenelements (Beispiel 1) wiedergibt;

Fig. 8 eine Messdatenkurve, die den für unterschiedliche Temperaturen bestimmten Ohmschen Widerstand eines erfindungsgemäßen Flächenelements (Beispiel 2) wiedergibt;

Fig. 9 eine Messdatenkurve, die den für unterschiedliche Temperaturen bestimmten Ohmschen Widerstand eines konventionellen Flächenelements (Vergleichsbeispiel 1) wiedergibt;

Fig. 10 zwei Messdatenkurven, die den für unterschiedliche starke Dehnungen bestimmten Ohmschen Widerstand von Heizschichten erfindungsgemäßer Flächenelemente in logarithmischer Darstellung wiedergeben;

Fig. 11 zwei Messdatenkurven, die den für unterschiedliche starke Dehnungen bestimmten Ohmschen Widerstand der Kontaktierungsschicht eines erfindungsgemäßen Flächenelements und einer konventionellen Kontaktierungsschicht wiedergeben; und

Fig. 12 vier Messdatenkurven, die die für unterschiedliche starke Dehnungen bestimmten relativen Änderungen des Ohmschen Widerstands der in Fig. 10 und Fig. 11 gezeigten Schichten wiedergeben.

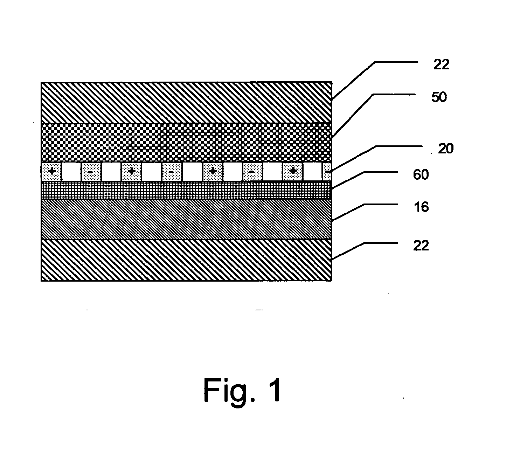

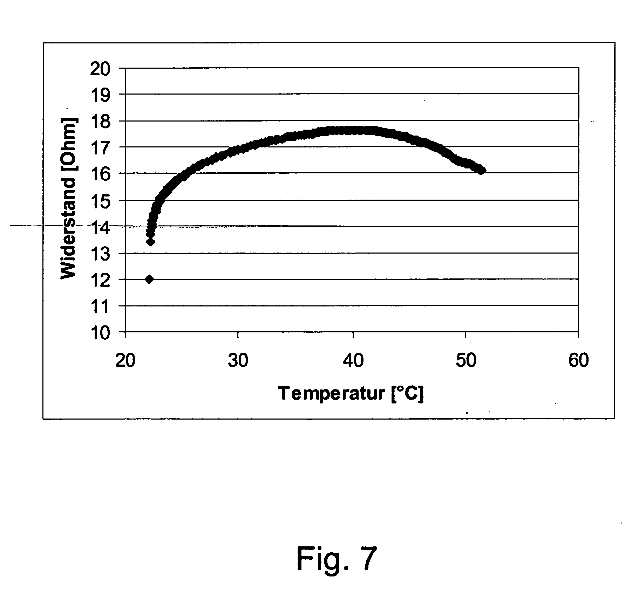

Im Folgenden werden zunächst Fig. 1-6 beschrieben, die in allgemeiner Weise unterschiedliche Strukturen von beheizten Flächenelementen zeigen. Anschließend werden exemplarisch konkrete Beispiele des erfindungsgemäßen Flächenelements beschrieben und Versuche zur Bestimmung der Eigenschaften dieser Flächenelemente dargestellt. Die Ergebnisse dieser Versuchsmessungen sind in Fig. 7-12 wiedergegeben.

In Fig. 1 ist ein aus dem Stand der Technik bekanntes Flächenelement mit einer ersten Heizschicht 50 und einer Kontaktierungsschicht 20 dargestellt, wobei die Kontaktierungsschicht 20 über eine Kaschierklebemasseschicht 60 mit einem permanenten Träger 16 verbunden ist. Das Flächenelement ist mit zwei Haftklebemasseschichten 22 beidseitig klebend ausgebildet. Ein derartiges Flächenelement besitzt einen relativ komplizierten mehrlagigen Aufbau und ist weder verformbar noch flexibel.

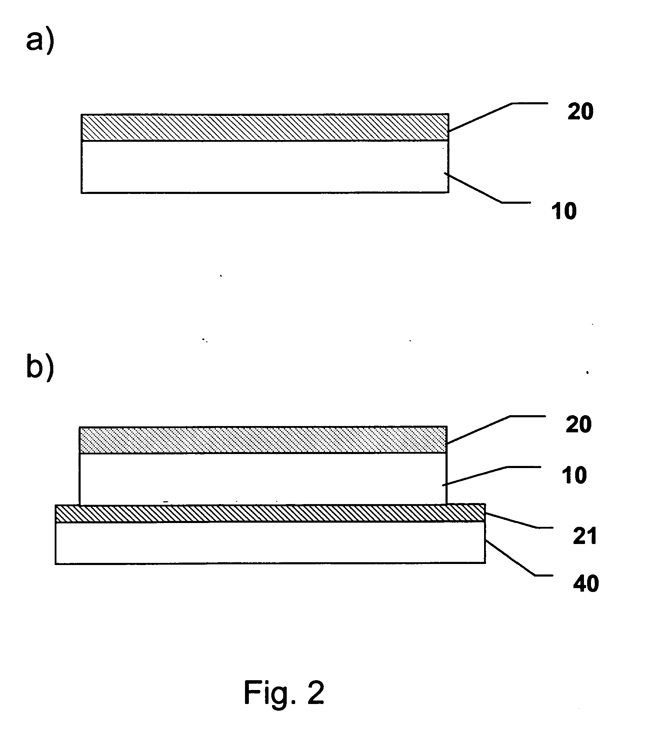

In Fig. 2 a) ist ein erfindungsgemäßes beidseitig verklebbares Flächenelement aus einer Kontaktierungsschicht 20 und einer Heizschicht 10 gezeigt. In Fig. 2 b) ist dieses Flächenelement im einseitig verklebten Zustand als Verklebungsverbund mit einem Spiegelglas dargestellt, das aus einer Glasscheibe 40 besteht, die einseitig eine metallische Spiegelschicht 21 aufweist. Die Kontaktierungsschicht 20 und die Heizschicht 10 werden im vorliegenden Fall aus elektrisch leitenden Polymermassen gebildet, die hochelastisch und damit verformbar sind. Die Polymermasse der Heizschicht 10 ist zudem als Selbstklebemasse ausgebildet. Beim Verkleben des Flächenelements mit dem Spiegelglas wird die selbstklebrige (das heißt haftklebrige oder heißschmelzklebrige) Heizschicht 10 mit der Rückseite der metallischen Spiegelschicht 21 verbunden. Die Kontaktierungsschicht 20 ist hier eine durchgängige Polymermasseschicht, die die eine Elektrode der Heizschicht darstellt; die andere Elektrode wird von der metallischen Spiegelschicht 21 gebildet.

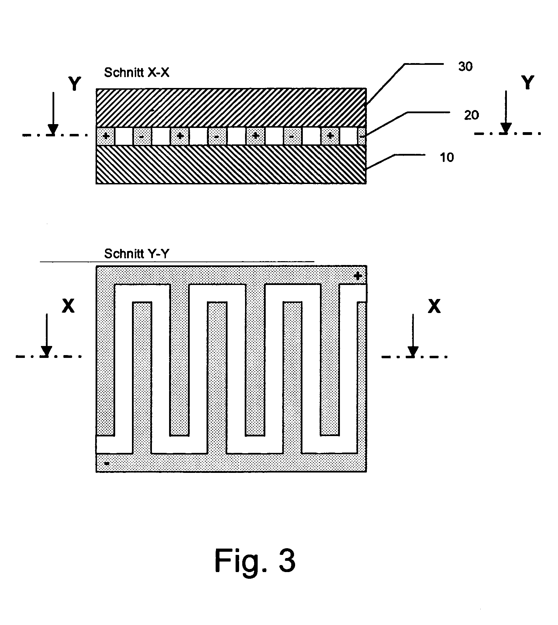

In Fig. 3 ist ein erfindungsgemäßes beidseitig verklebbares Flächenelement mit einer Kontaktierungsschicht 20 und einer Heizschicht 10 gezeigt, wobei die Kontaktierungsschicht 20 selber nicht-klebend ausgebildet ist und stattdessen eine zusätzliche Selbstklebemasseschicht 30 an der Kontaktierungsschicht 20 befestigt ist. Die Kontaktierungsschicht 20 weist hier eine Kammstruktur gleichmäßigen Querschnitts auf, bei dem die Finger im oberen Teilbereich auf derselben Seite des Hauptstrangs abzweigen wie die Finger im unteren Teilbereich. Wie aus dem oberen Teil von Fig. 3 erkennbar ist, weist die Kontaktierungsschicht 20 zwei nicht miteinander verbundene Teilbereiche auf, so dass diese als die beiden Kontaktelektroden (Pole) der Heizschicht dienen können (dargestellt durch die willkürlich gewählten unterschiedlichen Symbole "+" und "-"). Im Verbund mit einem Verklebungssubstrat ist daher eine weitere Kontaktelektrode als externe Gegenelektrode nicht erforderlich.

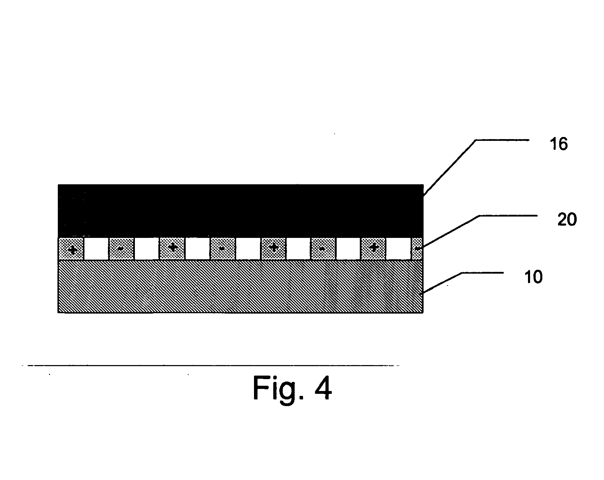

In Fig. 4 ist ein erfindungsgemäßes einseitig verklebbares Flächenelement mit einer Kontaktierungsschicht 20, einer Heizschicht 10 und einem verformbaren permanenten Träger 16 dargestellt, wobei die Kontaktierungsschicht 20 und Heizschicht 10 jeweils entweder haftklebrig oder heißschmelzklebrig ausgebildet sind. Auch hier weist die Kontaktierungsschicht 20 eine zweiteilige Kammstruktur auf, so dass im Verbund mit einem Verklebungssubstrat keine weitere Kontaktelektrode als externe Gegenelektrode erforderlich ist. Um die Elastizität des Aufbaus insgesamt nicht zu stark zur beeinträchtigen, weist der permanente Träger 16 eine Dicke von weniger als 50 μm auf, bevorzugt von weniger als 25 μm.

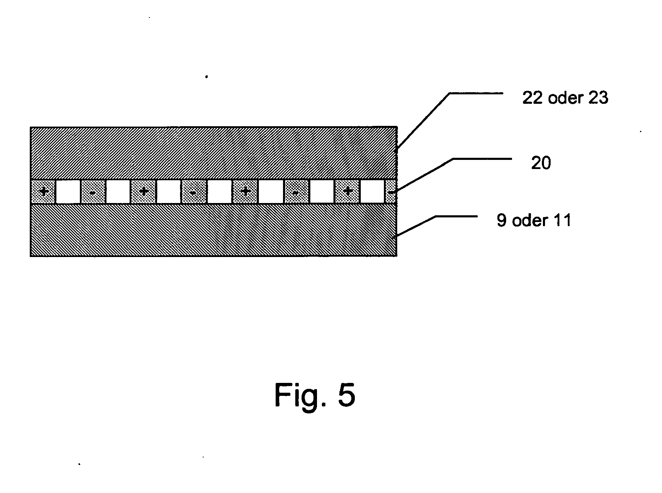

In Fig. 5 ist ein erfindungsgemäßes beidseitig verklebbares Flächenelement mit einer Kontaktierungsschicht 20 und einer Heizschicht 9/11 gezeigt, wobei die Kontaktierungsschicht 20 nicht selbstklebend ausgebildet ist, zusätzlich aber eine weitere Selbstklebemasseschicht 22/23 an der Kontaktierungsschicht 20 befestigt ist. Im Unterschied zu dem in Fig. 3 dargestellten Aufbau sind die Heizschicht und die weitere Selbstklebemasseschicht unterschiedlichen Arten an Selbstklebemassen, indem die Heizschicht 9 heißschmelzklebrig ausgebildet ist, wenn die weitere Selbstklebemasseschicht 22 haftklebrig ausgebildet ist, oder indem die Heizschicht 11 haftklebrig ausgebildet ist, wenn die weitere Selbstklebemasseschicht 23 heißschmelzklebrig ausgebildet ist.

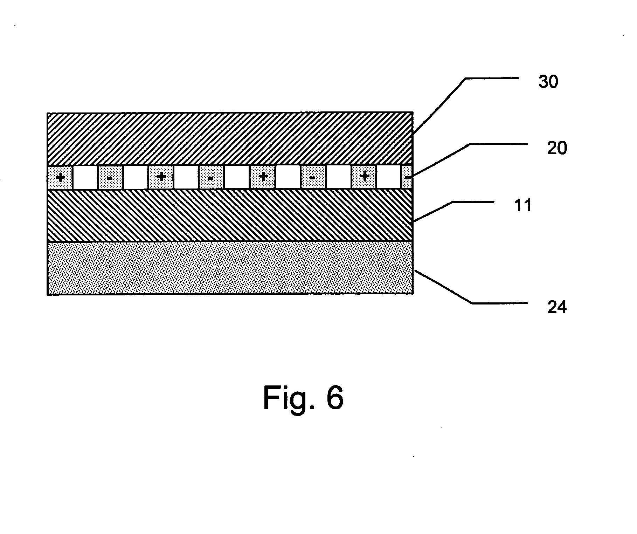

In Fig. 6 ist ein erfindungsgemäßes beidseitig verklebbares Flächenelement mit einer Kontaktierungsschicht 20 und einer haftklebrigen Heizschicht 11 gezeigt, wobei die Kontaktierungsschicht 20 selber nicht-klebend ausgebildet ist und stattdessen eine zusätzliche Selbstklebemasseschicht 30 an der Kontaktierungsschicht 20 befestigt ist. Im Unterschied zu dem in Fig. 3 dargestellten Aufbau weist dieses Flächenelement einen temporären Träger 24 auf, der mit der Heizschicht 11 in Kontakt steht.

Die Erfindung wird im Folgenden durch einzelne exemplarisch ausgewählte Experimente beschrieben, ohne sich durch die Wahl der untersuchten Proben unnötig beschränken zu wollen.

Es wurden die nachfolgend aufgeführten Testmethoden zur Charakterisierung der erfindungsgemäßen Flächenelemente angewendet:

Die Bestimmung der Klebkraft intrinsisch erwärmbarer Haftklebemassen (Test A) erfolgte in einem Schälversuch auf einer Stahlplatte unter einem Winkel von 180 ° bei einer Abzugsgeschwindigkeit von 300 mm/min entsprechend ASTM D 3330-04. Alle Messungen wurden bei Raumtemperatur (23 °C) unter klimatisierten Bedingungen (bei 50 % relativer Luftfeuchtigkeit) durchgeführt.

Die Bestimmung der Klebkraft intrinsisch erwärmbarer Heißschmelzklebemassen (Test B) erfolgte in einem T-Schälkrafttest. Hierzu wurde ein Streifen mit einer Stärke von 200 $\mu$m der zu untersuchenden Heißschmelzklebemasse mittels einer Heizpresse bei einer Temperatur von 140 °C unter Vakuum auf eine unbehandelte Polyesterfolie (Mitsubishi H) gesiegelt. Aus dem so erhaltenen Verbundsystem wurde ein Streifen mit einer Breite von 20 mm geschnitten und dieser für 24 h im Raumklima konditioniert. Anschließend wurde die Heizfolie bei Raumtemperatur unter klimatisierten Bedingungen wieder vom Polyesterträger abgezogen und die dafür benötigte Kraft gemessen. Dabei wurden weder die Heißschmelzklebemasse noch die Polyesterfolie gestützt oder fixiert, so dass sich ein T-förmiges Abschälen ergab. Die Messergebnisse sind in N/cm angegeben und aus drei Messungen gemittelt.

Die Bestimmung der elektrischen Erwärmbarkeit (Test C) erfolgte für ein Flächenelement, indem die Temperaturerhöhung nach Anlegen einer elektrischen Spannung gemessen wurde. Die Messung der Temperatur erfolgte mit einem Pt100-Thermofühler. Das erfindungsgemäße Flächenelement und das Vergleichsbeispiel wurden mit der selbstklebrigen Seite auf eine Glasplatte appliziert. An das flexible Heizelement wurde mittels eines Transformators eine Gleichspannung von 12,8 Volt angelegt. Die Temperatur wurde nach einer Zeit von 600 s direkt auf der Oberfläche der Glasplatte gemessen. Die Messergebnisse sind in °C angegeben.

Im Rahmen desselben Tests erfolgte die Ermittlung des Ausmaßes des PTC-Effekts bei den gleichen Testmustem; hierfür wurde der zeitliche Verlauf der sich einstellenden Temperatur nach Strombeaufschlagung aufgezeichnet. Die Messung der Temperatur erfolgte dabei wie vorstehend beschrieben. Weiterhin wurden Strom und Spannung im zeitlichen Verlauf aufgezeichnet, so dass daraus nach dem Ohmschen Gesetz die Widerstandsänderung berechnet werden konnte.

Zur Bestimmung der Flexibilität des Flächenelements (Test D) wurde die Durchbiegung eines einseitig eingespannten 10 cm langen und 2 cm breiten Streifens eines Flächenelements unter seinem Eigengewicht in horizontaler Lage gemessen. Dafür wurde der in Fig. 3 schematisch dargestellte Aufbau verwendet. In Fig. 3 ist ein intrinsisch erwärmbares Flächenelement aus einer Selbstklebemasseschicht 30, einer Kontaktierungsschicht 20 und einer Heizschicht 10 gezeigt, wobei die Kontaktierungsschicht 20 eine doppelte Kammstruktur aufweist. Der Test wurde ohne Abdeckmaterialien auf den Haftklebemassenflächen durchgeführt. Der Streifen wurde hierfür so ausgeschnitten, dass die Leiterbahnen im Wesentlichen quer zur Längsrichtung des Streifens lagen. Alle Messungen wurden bei Raumtemperatur unter klimatisierten Bedingungen durchgeführt.

Zur Bestimmung der Elastizität des Flächenelements (Test E) wurde der Zug-Elastizitätsmodul und die Reißdehnung bei Raumtemperatur nach DIN EN ISO 527-3 mit einem Probekörper vom Typ 5 für eine Dehngeschwindigkeit von 300 mm/min bestimmt. Gleichzeitig wurde der elektrische Widerstand der Probe mittels eines Labormultimeters zumindest im wesentlichen stromlos gemessen. Zu Beginn der Messung befanden sich die Messelektroden innerhalb des engen parallelen Teils des Messkörpers in einem Abstand zueinander von 25 mm. Zur näheren Charakterisierung des Dehnungsverhaltens wurde während der Messung des Zug-Elastizitätsmoduls und der Reißdehnung zusätzlich jeweils der elektrische Widerstand des Probenkörpers aufgenommen.

Als Beispiele für erfindungsgemäße Flächenelemente wurden Flächenelemente mit einer Haftklebemasse oder einer Heißschmelzklebemasse als erster Polymermasse hergestellt.

Für die intrinsisch erwärmbare Haftklebemasse wurde zunächst eine Basishaftklebemasse analog der Offenbarung in EP 04 712 016 hergestellt, die eine Comonomerzusammensetzung von 44,5 Gew.-% 2-Ethylhexylacrylat, 44,5 Gew.-% n-Butylacrylat, 8 Gew.-% Methylacrylat und 3 Gew.-% Acrylsäure besaß. Die Bestimmung des Molekulargewichts ergab ein mittleres Molekulargewicht $M_w$ von 650.000 g/mol bei einer Polydispersität $M_w/M_n$ von 7,0. Die so erhaltene Basishaftklebemasse wurde in Lösung mit 40 Gew.-% Graphit (Timcal Timrex KS 6) abgemischt und anschließend mittels eines Streichbalkens auf ein siliconisiertes Glassine-Trennpapier (Fa. Laufenberg) aufgetragen. Nach Trocknen für 10 Minuten bei 120 °C betrug die Dicke der so erhaltenen Haftklebemasseschicht 100 $\mu$m.

Anschließend wurde diese Haftklebemasse durch Elektronenbestrahlung vernetzt. Die Elektronenbestrahlung erfolgte mit einem Gerät der Fa. Electron Crosslinking AB, Halmstad, Schweden. Das beschichtete Haftklebeband wurde dabei über eine standardmäßig vorgesehene Kühlwalze unter dem Lenard-Fenster des Beschleunigers hindurch geführt. Dabei wurde der Luftsauerstoff in der Bestrahlungszone durch Spülen mit reinem Stickstoff verdrängt. Die Bahngeschwindigkeit betrug 10 m/min. Die Elektronenstrahldosis betrug hierbei 50 kGy bei einer Beschleunigungsspannung von 180 kV für Beispiel 1.

Für die intrinsisch erwärmbare Heißschmelzklebemasse wurde als Basisheißschmelzklebemasse ein Ethylen-Vinylacetat-Copolymer (EVA) des Typs Escorene Ultra FL 00728 (ExxonMobil) mit 28 Gew.-% Vinylacetatgehalt verwendet. In diese Basisheißschmelzklebemasse wurde mittels eines Messkneters vom Typ Haake Rheomix bei einer Temperatur von 140 °C und einer Drehzahl von 120 min$^{-1}$ 28 Gew.-% Leitruß (Ensaco 260 G; Timecal) über einen Zeitraum von 45 min eincompoundiert. Aus dem so erhaltenen Polymercompound wurde mittels einer Vakuumpresse ein Flächenelement mit einer Dicke von 200 $\mu$m hergestellt.

Für eine verformbare Polymermasse der Kontaktierungsschicht wurde als Basisheißschmelzklebemasse ein Ethylen-Vinylacetat-Copolymer (EVA) des Typs Escorene Ultra FL 00728 (ExxonMobil) mit 28 Gew.-% Vinylacetatgehalt verwendet. In diese Basisheißschmelzklebemasse wurde mittels eines Messkneters vom Typ Haake Rheomix bei einer Temperatur von 140 °C und einer Drehzahl von 120 min$^{-1}$ 28 Gew.-% Leitruß (Printex XE2; Degussa) über einen Zeitraum von 45 min eincompoundiert. Aus dem so erhaltenen Polymercompound wurde mittels einer Vakuumpresse ein Flächenelement mit einer Dicke von 200 μm hergestellt. Aus der so erhaltenen Folie wurde eine kammförmige Leiterbahnstruktur mit einem Elektrodenabstand von 1,5 mm und einer Elektrodenbreite von 5,0 mm als Kontaktierungsschicht ausgeschnitten.

Für eine erste nicht-verformbare Polymermasse der Kontaktierungsschicht wurde mit einer kommerziell erhältlichen Dispersion einer elektrisch leitenden Polymermasse auf der Basis von PEDOT/PSS (Clevios F; Fa. H.C. Starck) eine kammförmige Leiterbahnstruktur mit einem Elektrodenabstand von 1,5 mm und einer Elektrodenbreite von 5,0 mm in einer Dicke von 5 μm auf einen Prozessliner aufgebracht.

Für eine zweite nicht-verformbare Polymermasse der Kontaktierungsschicht wurde ein kommerziell erhältlicher Silberleitlack (Fa. Conrad Electronic) in einer Schichtdicke von 25 μm auf eine ungefüllte Ethylenvinylacetatfolie von 200 μm Stärke aufgetragen.

Für Beispiel 1 wurde der in Fig. 3 dargestellte Aufbau unter Verwendung der zuvor beschriebenen intrinsisch erwärmbaren Haftklebemasse mit einer Dicke von 100 μm als Heizschicht 10, der zuvor beschriebenen Basishaftklebemasse, die unter den gleichen Bedingungen wie die intrinsisch erwärmbare Haftklebemasse zur weiteren Vernetzung Elektronenstahlen ausgesetzt worden war, in einer Dicke von 75 μm als Selbstklebemasseschicht 30 und mit der zuvor beschriebenen verformbaren Polymermasseschicht mit doppelter Kammstruktur als Kontaktierungsschicht 20 eingesetzt. Die erwärmbare Fläche hatte eine Größe von 180 cm$^2$.

Für Beispiel 2 wurde der in Fig. 3 dargestellte Aufbau unter Verwendung der zuvor beschriebenen intrinsisch erwärmbaren Heißschmelzklebemasse mit einer Dicke von 200 μm als Heizschicht 10, der zuvor beschriebenen Basishaftklebemasse mit einer Dicke von 75 μm als Selbstklebemasseschicht 30 und der zuvor beschriebenen verformbaren Polymermasseschicht mit doppelter Kammstruktur als Kontaktierungsschicht 20 eingesetzt. Die erwärmbare Fläche hatte eine Größe von 180 cm$^2$.

Für Vergleichsbeispiel 1 wurde ein kommerziell verfügbares Kaltleiter-Heizelement nach dem Stand der Technik von einem Außenspiegel der Firma Porsche verwendet.

Die Klebkraft wurde für die zuvor beschriebene Basishaftklebemasse sowie für die zuvor beschriebene erwärmbare Haftklebemasse nach Test A ermittelt:

| | |
|---|---|
| Basishaftklebemasse: | 7,4 N/cm |
| erwärmbare Haftklebemasse: | 6,3 N/cm |

Die Ergebnisse dieses Tests zeigen, dass durch Beimengen eines leitfähigen Füllstoffs zu der Basishaftklebemasse deren haftklebrige Eigenschaften weitgehend erhalten bleiben.

Die Schälkraft (Peelkraft) wurde für die zuvor beschriebene Basisheißschmelzklebemasse sowie für die zuvor beschriebene erwärmbare Heißschmelzklebemasse nach Test B ermittelt:

| | |
|---|---|
| Basisheißschmelzklebemasse: | 4,5 N/cm |
| erwärmbare Heißschmelzklebemasse: | 2,9 N/cm |

Die Ergebnisse dieses Tests zeigen, dass durch Beimengen eines leitfähigen Füllstoffs zu der Basisheißschmelzklebemasse deren heißschmelzklebrige Eigenschaften weitgehend erhalten bleiben

Die Erwärmbarkeit und der PTC-Effekt wurden für Beispiel 1 und Beispiel 2 sowie für Vergleichsbeispiel 1 nach Test C ermittelt. Dabei erreichten die Flächenelemente folgende Temperaturen:

| | |
|---|---|
| Beispiel 1: | 53 °C |
| Beispiel 2: | 54 °C |
| Vergleichsbeispiel 1: | 54 °C |

Die Ergebnisse dieses Tests zeigen, dass die erfindungsgemäßen Flächenelemente eine Heizleistung erreichen, die der Heizleistung von derzeit auf dem Markt verfügbaren Autospiegelheizungssystemen aus dem Stand der Technik entspricht.

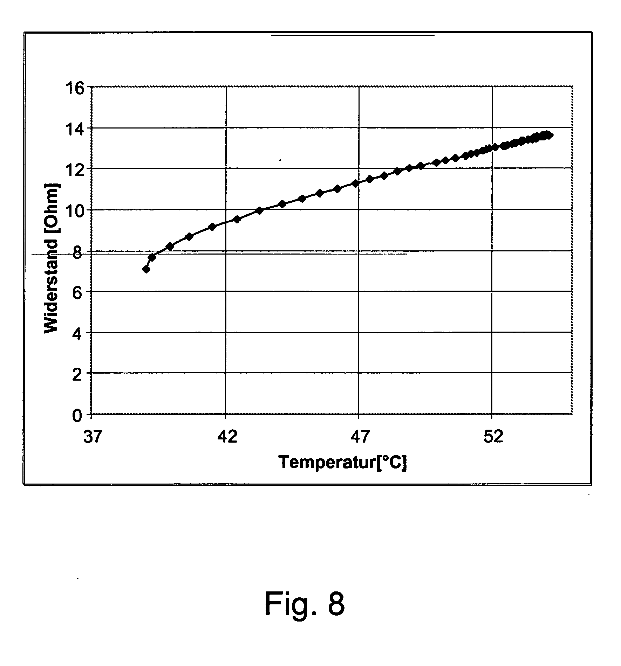

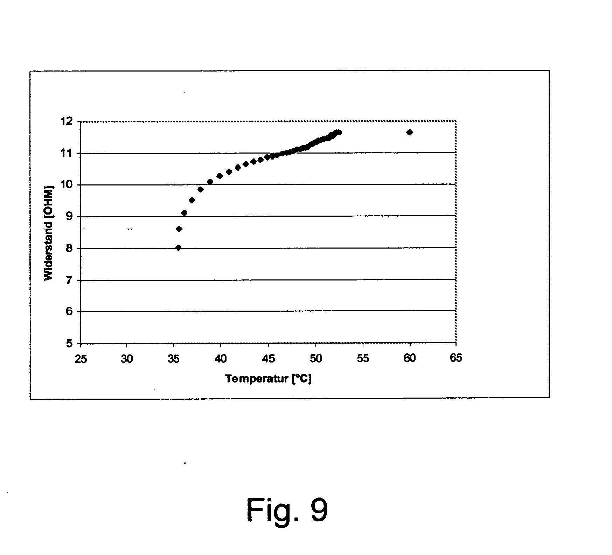

Der aus dem Momentanstrom und der jeweiligen Momentanspannung aus Test C errechnete Gesamtwiderstand des Flächenelements ist in Fig. 7, Fig. 8 und Fig. 9 in Abhängigkeit von der Temperatur wiedergegeben. Die hieraus erhaltene Kurvenform bietet Hinweise auf den PTC-Effekt der Heizschichten. Fig. 7 zeigt die Ergebnisse für Beispiel 1, Fig. 8 die Ergebnisse für Beispiel 2 und Fig. 9 die Ergebnisse für Vergleichsbeispiel 1.

In Fig. 7 ist zu erkennen, dass der Widerstand bis zu einer Temperatur von etwa 40 °C stark zunimmt und zu noch höheren Temperaturen hin schwach abnimmt. Beispiel 1 verhält sich also bei Temperaturen unterhalb von etwa 40 °C ausgeprägt kaltleitend und weist bei Temperaturen oberhalb von 40 °C einen schwachen NTC-Effekt auf. Beispiel 2 (Fig. 8) verhält sich über den gesamten untersuchten Temperaturbereich ausgeprägt kaltleitend. Vergleichsbeispiel 1 (Fig. 9) verhält sich über den gesamten untersuchten Temperaturbereich kaltleitend. Beim Vergleich der hierbei erhaltenen Messdatenkurven ist erkennbar, dass der PTC-Effekt für die erfindungsgemäßen Flächenelemente (Fig. 7 und Fig. 8 ) zum Teil sogar noch ausgeprägter ist als für das kommerzielle Vergleichsbeispiel (Fig. 9).

Die Verformbarkeit der Flächenelemente wurde für Beispiel 1 (mit der zuvor beschriebenen erwärmbaren Haftklebemasse) und für Beispiel 2 (mit der zuvor beschriebenen erwärmbaren Heißschmelzklebemasse) sowie für Vergleichsbeispiel 1 nach Test D ermittelt. Dabei wurden folgende Durchbiegungen gemessen:

|  |  |
|---|---|
| Beispiel 1: | 75 mm |
| Beispiel 2: | 60 mm |
| Vergleichsbeispiel 1 | 15 mm |

Die Ergebnisse dieses Tests zeigen, dass die erfindungsgemäßen Flächenelemente eine erheblich höhere Flexibilität aufweisen als die aus dem Stand der Technik bekannten Flächenelemente.

Die Verformbarkeit der Flächenelemente wurde anhand des Zug-Elastizitätsmoduls und der Reißdehnung für die intrinsisch erwärmbare Haftklebemasse (Basishaftklebemasse), die intrinsisch erwärmbare Heißschmelzklebemasse (Basisheißschmelzklebemasse), die verformbare Polymermasse, die erste nicht-verformbare Polymermasse (Polymermasse auf der Basis von PEDOT/PSS) und die zweite nicht-verformbare Polymermasse (Silber-Leitlack) nach Test E ermittelt. Bei diesen Untersuchungen wurden für die Proben die folgenden Zug-Elastizitätsmoduln und Reißdehnungen bestimmt:

| Probe | Elastizitätsmodul | Reißdehnung |
|---|---|---|
| intrinsisch erwärmbare Haftklebemasse | 2,2 MPa | 424 % |
| intrinsisch erwärmbare Heißschmelzklebemasse | 35,6 MPa | 306 % |
| verformbare Polymermasse | 63 MPa | 367 % |
| erste nicht-verformbare Polymermasse | nicht bestimmbar | [ < 10 % ] |
| zweite nicht-verformbare Polymermasse | nicht bestimmbar | [ ≈ 25 % ] |

Die Ergebnisse dieses Tests zeigen, dass die erfindungsgemäßen Polymermassen einen erheblich geringeren Elastizitätsmodul und eine erheblich höhere Reißdehnung aufweisen als die aus dem Stand der Technik bekannten Polymermassen.

So konnte für die herkömmlichen Klebemassen (erste und zweite nicht-verformbare Polymermasse) nicht einmal der Zug-Elastizitätsmodul bestimmt werden, da diese derart spröde waren, dass die Probenkörper bereits beim Einspannen der freitragenden Schichten brachen. Daher war es für diese Proben (erste und zweite nicht-verformbare Polymermasse) auch nicht möglich, die Reißdehnung exakt zu bestimmen; diese konnte jedoch näherungsweise abgeschätzt werden, indem die nicht-verformbaren Polymermassen auf einen elastischen, elektrisch nichtleitenden Hilfsträger aufgebracht wurden und die Änderung des elektrischen Widerstands der nicht-verformbaren Polymermassen unter Dehnung des Hilfsträgers bestimmt wurde.

Für die spröden Materialien kam es jeweils bei einer bestimmten Dehnung zu einem sprunghaften Anstieg des elektrischen Widerstands. Dieser Anstieg wurde als Reißen (Bruch) der Schichten aus den nicht-verformbaren Polymermassen interpretiert, auf dessen Grundlage die entsprechende theoretische Reißdehnung abgeschätzt wurde. Auf diese Weise wurde für die erste nicht-verformbare Polymermasse eine Reißdehnung von weniger als 10 % bestimmt, wohingegen die Reißdehnung der zweiten nicht-verformbaren Polymermasse etwa 25 % betrug.

Somit weist die zweite nicht-verformbare Polymermasse zwar eine Reißdehnung auf, die in dem erfindungsgemäß erforderlichen Bereich von mehr als 20 % liegt, jedoch wird das Erfordernis eines Zug-Elastizitätsmoduls von weniger als 1.000 MPa von diesem System nicht erfüllt. Dieses Ergebnis zeigt, dass es zum Erzielen der erfindungsgemäßen Wirkung nicht ausreichend ist, wenn die Polymermassen nur eines der beiden Merkmale (Reißdehnung und Zug-Elastizitätsmodul) aufweisen; vielmehr ist es zwingend erforderlich, dass beide Polymermassen jeweils beide Merkmale gleichzeitig realisieren.

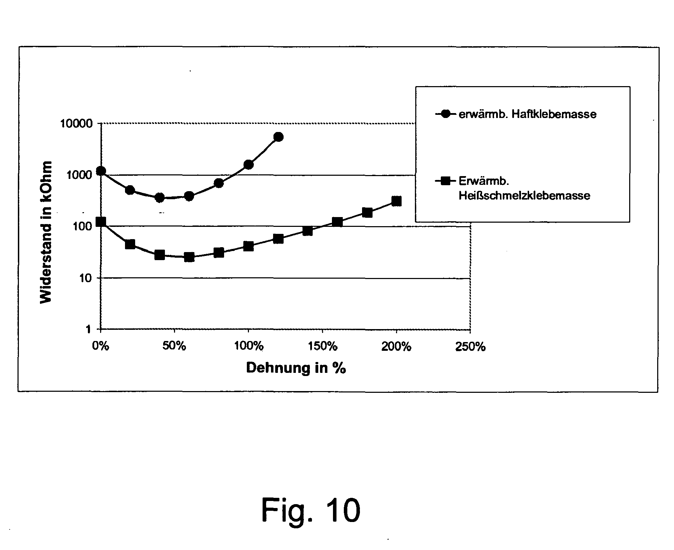

Die im Verlauf der Messung des Zug-Elastizitätsmoduls und der Reißdehnung bei unterschiedlicher Dehnung gemessenen Widerstände der Probenkörper sind in Fig. 10, Fig. 11 und Fig. 12 wiedergegeben. Dabei ergaben sich vor der Dehnung (d.h. bei einer Dehnung von null) folgende anfängliche Werte für den elektrischen Widerstand:

| intrinsisch erwärmbare Haftklebemasse | 1,15 MΩ |
| intrinsisch erwärmbare Heißschmelzklebemasse | 118 kΩ |
| verformbare Polymermasse | 2,6 kΩ |
| erste nicht-verformbare Polymermasse | 90 Ω |
| zweite nicht-verformbare Polymermasse | 50 Ω |

In Fig. 10 ist die Änderung des elektrischen Widerstands bei Dehnung des Probekörpers für die beiden intrinsisch erwärmbaren Klebemassen dargestellt, aus denen erfindungsgemäß eine Heizschicht gebildet werden kann. Bei einer, im praktischen Gebrauch üblicherweise auftretenden geringen Dehnung bis zu etwa 50 % (bezogen auf die anfänglichen Abmessungen) wird eine Abnahme des Widerstands beobachtet. Erst bei einer sehr starken Dehnung um mehr als 50 % tritt ein Anstieg des Widerstands auf, der auf eine Verringerung des Querschnitts bei extremer Dehnung zurückzuführen ist (eine derartige starke Dehnung sollte jedoch in der Praxis beim Verkleben auf einem unebenen Untergrund in der Regel ohne Bedeutung sein, da die Flächenelemente nicht derartig stark gestreckt werden). Der anfänglich gemessene Widerstand wird erst bei einer Dehnung von 90 % (Haftklebemasse) bzw. sogar 150 % (Heißschmelzklebemasse) überschritten. Bei einer Dehnung von 100 % weisen beide Proben jedoch noch Widerstände auf, die deutlich unter dem zweifachen Wert des anfänglich gemessenen Widerstands liegen.

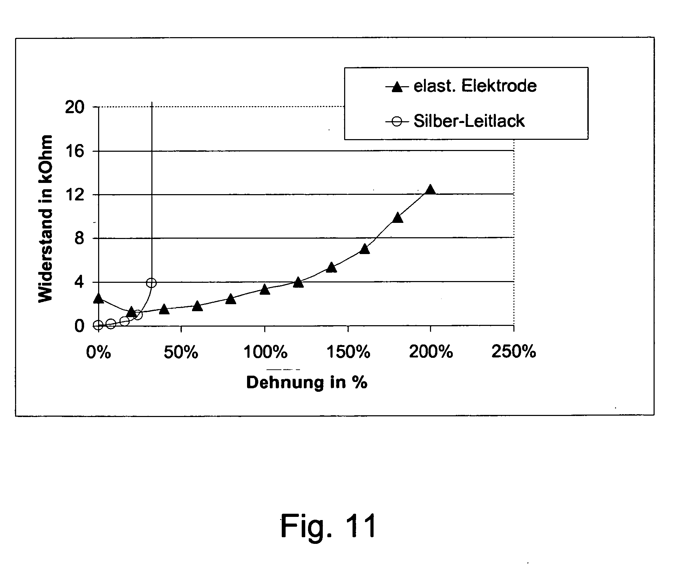

In Fig. 11 ist die Änderung des elektrischen Widerstands bei einer Dehnung des Probekörpers für die verformbare Polymermasse ("elast. Elektrode"), aus der erfindungsgemäß eine Kontaktierungsschicht gebildet werden kann, und für die zweite nicht-verformbare Polymermasse (Silber-Leitlack) dargestellt. Die verformbare Polymermasse zeigt eine geringe Abnahme des elektrischen Widerstands bis zu einer Dehnung von etwa 25 %, wohingegen bei größeren Dehnungen ein Anstieg des elektrischen Widerstands beobachtet wird. Entsprechend der Anwendung dieser Polymermasse als Kontaktierungsschicht liegt der absolute Wert des Widerstands um mehr als eine Größenordnung niedriger als bei den in Fig. 10 gezeigten Datenkurven der Polymermassen für die Heizschicht. Der Silber-Leitlack zeigt hingegen einen sprunghaften Anstieg des elektrischen Widerstands bei einer Dehnung von mehr als 25 %, der als Reißen des Lackfilms interpretiert wurde.

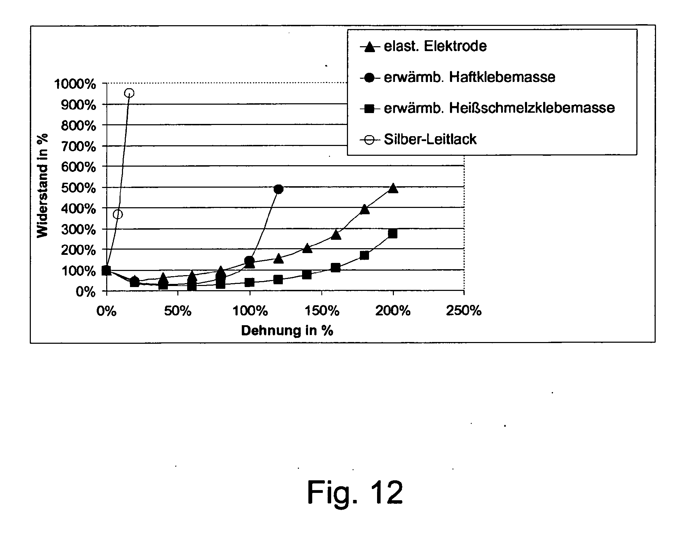

In Figur 12 sind die in Fig. 10 und 11 dargestellten Messdatenkurven als auf den jeweiligen anfänglichen Widerstand bezogene Datenkurven zusammenfassend dargestellt, die demzufolge also die relative Änderung des elektrischen Widerstands wiedergeben. Es ist zu erkennen, dass bei allen in dem erfindungsgemäßen Flächenelement einsetzbaren Polymermassen im Unterschied zu dem Silber-Leitlack auch bei Dehnungen von 100 % der Widerstand nicht das Zweifache des ursprünglichen Anfangswerts übersteigt, so dass alle diese Polymermassen einen Stromfluss durch die Polymermasse erlauben (gegebenenfalls mit Heizwirkung).

Die Ergebnisse dieser Tests zeigen, dass die efindungsgemäßen Flächenelemente eine erheblich höhere Verformbarkeit aufweisen als die aus dem Stand der Technik bekannten Flächenelemente, ohne dass es zu einem Kollaps der Struktur dieser Schicht und der damit verbundenen Funktionalität (elektrische Leitfähigkeit) kommt.

Somit belegen die vorstehend beschriebenen exemplarischen Versuche die hervorragende Eignung der erfindungsgemäßen flexiblen Flächenelemente zum Erzielen einer stabilen beheizbaren Verklebung.

**Patentansprüche**

1. Selbstklebendes Flächenelement umfassend eine Heizschicht und eine Kontaktierungsschicht,
   wobei die Heizschicht
   mit einer der beiden Seitenflächen der Kontaktierungsschicht in Kontakt steht und mit dieser elektrisch leitend verbunden ist, und
   aus einer intrinsisch erwärmbaren ersten Polymermasse besteht, die als bei Hindurchleiten eines elektrischen Stroms sich erwärmender Leiter ausgebildet ist,
   **dadurch gekennzeichnet, dass**
   die Kontaktierungsschicht aus einer elektrisch leitenden zweiten Polymermasse besteht,
   wobei die erste Polymermasse und die zweite Polymermasse
   jeweils eine Polymermasse auf der Basis von Elastomeren und/oder von plastischen Polymeren ist, und
   jeweils bei einer Dehngeschwindigkeit von 300 mm/min und einer Temperatur von 23 °C eine Reißdehnung von mehr als 20 % aufweist, insbesondere von mehr als 50 % oder sogar von mehr als 100 %, und außerdem einen Zug-Elastizitätsmodul von weniger als 1.000 MPa oder sogar von höchstens 100 MPa besitzt.

2. Flächenelement nach Anspruch 1, **dadurch gekennzeichnet, dass** die erste Polymermasse und/oder die zweite Polymermasse eine Selbstklebemasse ist.

EP 2 224 784 B1

3. Flächenelement nach Anspruch 2, **dadurch gekennzeichnet, dass** die Selbstklebemasse eine Haftklebemasse auf der Basis von Acrylaten und/oder Methacrylaten, Polyurethanen, Naturkautschuken, Synthesekautschuken und/oder Silikonen ist.

4. Flächenelement nach Anspruch 2, **dadurch gekennzeichnet, dass** die Selbstklebemasse eine Heißschmelzklebemasse auf der Basis von Polyolefinen und Copolymeren von Polyolefinen und/oder von deren säuremodifizierten Derivaten, von Ionomeren, von thermoplastischen Polyurethanen, von Polyamiden und deren Copolymeren und/oder von Blockcopolymeren wie Styrol-Blockcopolymeren ist.

5. Flächenelement nach einem der Ansprüche 1 bis 4, **dadurch gekennzeichnet, dass** das Flächenelement ferner eine Klebemasseschicht aus einer Selbstklebemasse umfasst, die mit der anderen der beiden Seitenflächen der Kontaktierungsschicht in Kontakt steht.

6. Flächenelement nach einem der Ansprüche 1 bis 5, **dadurch gekennzeichnet, dass** die erste Polymermasse ein Kaltleiter ist.

7. Flächenelement nach einem der Ansprüche 1 bis 6, **dadurch gekennzeichnet, dass** die zweite Polymermasse kein Kaltleiter ist.

8. Flächenelement nach einem der Ansprüche 1 bis 7, **dadurch gekennzeichnet, dass** der elektrische Widerstand der Kontaktierungsschicht weniger als ein Zehntel des elektrischen Widerstands der Heizschicht beträgt.

9. Flächenelement nach einem der Ansprüche 1 bis 8, **dadurch gekennzeichnet, dass** sich der elektrische Widerstand der Kontaktierungsschicht bei einer Dehnung der Kontaktierungsschicht um mehr als 20 %, insbesondere um mehr als 50 % oder sogar um mehr als 100 % höchstens verdreifacht, insbesondere sich nicht vergrößert.

10. Flächenelement nach einem der Ansprüche 1 bis 9, **dadurch gekennzeichnet, dass** die Kontaktierungsschicht eine verzweigte Kammstruktur oder Fingerstruktur aufweist.

11. Flächenelement nach einem der Ansprüche 1 bis 10, **dadurch gekennzeichnet, dass** die erste Polymermasse und/oder die zweite Polymermasse mindestens einen elektrisch leitenden Füllstoff umfasst.

12. Flächenelement nach Anspruch 11, **dadurch gekennzeichnet, dass** der elektrisch leitende Füllstoff ausgewählt ist aus der Gruppe umfassend Metallpartikel, Graphit, Kohlenstoff-Nanoteilchen und Ruß, insbesondere Leitruß.

13. Flächenelement nach einem der Ansprüche 1 bis 12, **dadurch gekennzeichnet, dass** dieses trägerfrei ausgebildet ist.

14. Flächenelement nach einem der Ansprüche 1 bis 12, **dadurch gekennzeichnet, dass** dieses einen Träger umfasst, der bei einer Dehngeschwindigkeit von 300 mm/min und einer Temperatur von 23 °C eine Reißdehnung von mehr als 20 %, insbesondere von mehr als 50 % oder sogar von mehr als 100 % und außerdem einen Zug-Elastizitätsmodul von weniger als 1.000 MPa oder sogar von höchstens 100 MPa aufweist.

15. Verklebungsverbund aus einem Verklebungssubstrat und einem Flächenelement nach einem der Ansprüche 1 bis 14, insbesondere mit einer Sichtscheibe oder Spiegelscheibe als Verklebungssubstrat.

16. Verwendung eines Flächenelements nach einem der Ansprüche 1 bis 14 zum Beheizen eines Verklebungsverbunds nach Anspruch 15, insbesondere auf Verklebungssubstraten in der Automobilindustrie.

**Claims**

1. Self-adhesive planar element comprising a heating layer and a contacting layer,
   the heating layer
   being in contact with one of the two side faces of the contacting layer and being in electrically conducting communication therewith, and
   being composed of an intrinsically heatable first polymeric material formed as a conductor which heats up when an electric current is passed through,

**characterized in that**

the contacting layer is composed of an electrically conducting second polymeric material,

the first polymeric material and the second polymeric material

each being a polymeric material based on elastomers and/or on plastic polymers, and

each having, at a stretching velocity of 300 mm/min and a temperature of 23°C, an elongation at break of more than 20%, more particularly of more than 50% or even of more than 100%, and further possessing a tensile elasticity modulus of less than 1000 MPa or even of not more than 100 MPa.

2. Planar element according to Claim 1, **characterized in that** the first polymeric material and/or the second polymeric material are/is a self-adhesive.

3. Planar element according to Claim 2, **characterized in that** the self-adhesive is a pressure-sensitive adhesive based on acrylates and/or methacrylates, polyurethanes, natural rubbers, synthetic rubbers and/or silicones.

4. Planar element according to Claim 2, **characterized in that** the self-adhesive is a hotmelt adhesive based on polyolefins and copolymers of polyolefins and/or on their acid-modified derivatives, on ionomers, on thermoplastic polyurethanes, on polyamides and their copolymers and/or on block copolymers such as styrene block copolymers.

5. Planar element according to any of Claims 1 to 4, **characterized in that** the planar element further comprises a layer of adhesive comprising a self-adhesive, which is in contact with the other of the two side faces of the contacting layer.

6. Planar element according to any of Claims 1 to 5, **characterized in that** the first polymeric material is a posistor.

7. Planar element according to any of Claims 1 to 6, **characterized in that** the second polymeric material is not a posistor.

8. Planar element according to any of Claims 1 to 7, **characterized in that** the electrical resistance of the contacting layer is less than one tenth of the electrical resistance of the heating layer.

9. Planar element according to any of Claims 1 to 8, **characterized in that** the electrical resistance of the contacting layer, when the contacting layer is stretched by more than 20%, more particularly by more than 50% or even by more than 100%, goes up by not more than three times, and more particularly does not increase.

10. Planar element according to any of Claims 1 to 9, **characterized in that** the contacting layer has a branched comb structure or finger structure.

11. Planar element according to any of Claims 1 to 10, **characterized in that** the first polymeric material and/or the second polymeric material comprise/comprises at least one electrically conducting filler.

12. Planar element according to Claim 11, **characterized in that** the electrically conducting filler is selected from the group encompassing metal particles, graphite, carbon nanoparticles and carbon black, more particularly conductive carbon black.

13. Planar element according to any of Claims 1 to 12, **characterized in that** it is of carrier-free form.

14. Planar element according to any of Claims 1 to 12, **characterized in that** it comprises a carrier which, at a stretching velocity of 300 mm/min and a temperature of 23°C, has an elongation at break of more than 20%, more particularly of more than 50% or even of more than 100%, and further has a tensile elasticity modulus of less than 1000 MPa or even of not more than 100 MPa.

15. Adhesively bonded assembly comprising a bonding substrate and a planar element according to any of Claims 1 to 14, more particularly having a viewing sheet or mirror sheet as bonding substrate.

16. Use of a planar element according to any of Claims 1 to 14 for heating an adhesively bonded assembly according to Claim 15, more particularly on bonding substrates in the automotive industry.

**Revendications**

1. Elément plat autoadhésif comprenant une couche chauffante et une couche de mise en contact, la couche chauffante étant en contact avec une des deux faces latérales de la couche de mise en contact et assemblée de manière électriquement conductrice à celle-ci, et

   étant constituée par une première masse polymère pouvant être intrinsèquement chauffée, qui est réalisée comme conducteur qui s'échauffe lors du passage d'un courant électrique,

   **caractérisé**

   **en ce que** la couche de mise en contact est constituée par une deuxième masse polymère électriquement conductrice, la première masse polymère et la deuxième masse polymère

   étant chacune une masse polymère à base d'élastomères et/ou de polymères plastiques, et

   présentant chacune, à une vitesse d'allongement de 300 mm/min et une température de 23°C un allongement à la déchirure de plus de 20%, en particulier de plus de 50% ou même de plus de 100%, et présentant en outre un module d'élasticité à la traction inférieur à 1000 MPa ou même d'au plus 100 MPa.

2. Elément plat selon la revendication 1, **caractérisé en ce que** la première masse polymère et/ou la deuxième masse polymère est une masse autoadhésive.

3. Elément plat selon la revendication 2, **caractérisé en ce que** la masse autoadhésive est une masse d'adhésif de contact à base d'acrylates et/ou de méthacrylates, de polyuréthanes, de caoutchoucs naturels, de caoutchoucs de synthèse et/ou de silicones.

4. Elément plat selon la revendication 2, **caractérisé en ce que** la masse autoadhésive est une masse autoadhésive chauffante à base de polyoléfines et de copolymères de polyoléfines et/ou de leurs dérivés modifiés par un acide, d'ionomères, de polyuréthanes thermoplastiques, de polyamides et de leurs copolymères et/ou de copolymères à blocs, tels que des copolymères à blocs de styrène.

5. Elément plat selon l'une quelconque des revendications 1 à 4, **caractérisé en ce que** l'élément plat comprend en outre une couche de masse adhésive constituée par une masse autoadhésive qui est en contact avec l'autre des deux faces latérales de la couche de mise en contact.

6. Elément plat selon l'une quelconque des revendications 1 à 5, **caractérisé en ce que** la première masse polymère est un conducteur froid.

7. Elément plat selon l'une quelconque des revendications 1 à 6, **caractérisé en ce que** la deuxième masse polymère n'est pas un conducteur froid.

8. Elément plat selon l'une quelconque des revendications 1 à 7, **caractérisé en ce que** la résistance électrique de la couche de mise en contact est inférieure à un dixième de la résistance électrique de la couche chauffante.

9. Elément plat selon l'une quelconque des revendications 1 à 8, **caractérisé en ce que** la résistance électrique de la couche de mise en contact, lors d'un allongement de la couche de mise en contact de plus de 20%, en particulier de plus de 50% ou même de plus de 100%, triple au maximum, en particulier n'augmente pas.

10. Elément plat selon l'une quelconque des revendications 1 à 9, **caractérisé en ce que** la couche de mise en contact présente une structure ramifiée en peigne ou à doigts.

11. Elément plat selon l'une quelconque des revendications 1 à 10, **caractérisé en ce que** la première masse polymère et/ou la deuxième masse polymère comprend au moins une charge électriquement conductrice.

12. Elément plat selon la revendication 11, **caractérisé en ce que** la charge électriquement conductrice est choisie dans le groupe comprenant les particules métalliques, le graphite, les nanoparticules de carbone et la suie, en particulier la suie conductrice.

13. Elément plat selon l'une quelconque des revendications 1 à 12, **caractérisé en ce que** celui-ci est réalisé sans support.

14. Elément plat selon l'une quelconque des revendications 1 à 12, **caractérisé en ce qu'**il comprend un support qui présente, à une vitesse d'allongement de 300 mm/min et une température de 23°C un allongement à la déchirure de plus de 20%, en particulier de plus de 50% ou même de plus de 100%, et en outre un module d'élasticité à la traction inférieur à 1000 MPa ou même d'au plus 100 MPa.

15. Assemblage collé, constitué par un substrat de collage et un élément plat selon l'une quelconque des revendications 1 à 14, présentant en particulier une fenêtre ou un réflecteur comme substrat de collage.

16. Utilisation d'un élément plat selon l'une quelconque des revendications 1 à 14 lors du chauffage d'un assemblage collé selon la revendication 15, en particulier sur des substrats de collage dans l'industrie automobile.

Fig. 1

a)

20

10

b)

20

10

21

40

Fig. 2

Schnitt X-X

30

20

10

Y

Y

Schnitt Y-Y

+

-

X

X

Fig. 3

Fig. 4

22 oder 23

20

9 oder 11

# Fig. 5

**Fig. 6**

Fig. 7

Fig. 8

Fig. 9

Fig. 10

Fig. 11

Fig. 12

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10310722 A1
- DE 102007007617
- DE 2948350 A1
- EP 0307205 A1
- EP 0512703 A1
- EP 0852801 A1
- EP 0435923 A1
- EP 0311142 A1
- US 4775778 A
- EP 04712016 A

**In der Beschreibung aufgeführte Nicht-Patentliteratur**

- **Donatas Satas.** Handbook of Pressure Sensitive Adhesive Technology. 1989
- **T.G. Fox.** *Bull. Am. Phys. Soc.,* 1956, vol. 1, 123
- **J. Meyer.** *Polymer Engineering and Science,* 1973, vol. 13, 462-468
- Etectron Beam Processing. **Skelhome.** Chemistry and Technology of UV and EB Formulation for Coatings, Inks and Paints. SITA, 1991, vol. 1